# EUROPÄISCHE PATENTSCHRIFT

(11) **EP 1 151 399 B1**
(45) Veröffentlichungstag und Bekanntmachung des Hinweises auf die Patenterteilung: **15.01.2003**
(21) Anmeldenummer: 00974383.2
(22) Anmeldetag: 11.10.2000
(51) Int. Cl.: G06F 17/30

(54) **Integration heterogener Datenbank-Systeme**
Integration of heterogeneous database systems
Integration des systèmes de base de données hétérogènes

(30) Priorität: 14.10.1999 EP 99120009
(43) Veröffentlichungstag der Anmeldung: 07.11.2001
(60) Teilanmeldung: 02010023.6
(73) Patentinhaber: SAP Aktiengesellschaft, 69190 Walldorf (DE)
(72) Erfinder: PAULY, Heinz, 67071 Ludwigshafen (DE); BRENDLE, Rainer, 69151 Neckargemünd (DE)
(74) Vertreter: Pfeifer, Hans-Peter, Dr.
(86) Internationale Anmeldenummer: EP0009973
(87) Internationale Veröffentlichungsnummer: WO01027806

(56) Entgegenhaltungen:
- EP-A- 0 592 045
- WO-A-93/04436
- US-A- 4 714 995
- US-A- 5 870 765
- GRAY J ET AL: "The dangers of replication and a solution" 1996 ACM SIGMOD INTERNATIONAL CONFERENCE ON MANAGEMENT OF DATA, MONTREAL, QUE., CANADA, 4-6 JUNE 1996, Bd. 25, Nr. 2, Seiten 173-182, XP002146555 SIGMOD Record, June 1996, ACM, USA ISSN: 0163-5808
- HUSTON L B ET AL: "DISCONNECTED OPERATION FOR AFS" PROCEEDINGS OF THE USENIX MOBILE AND LOCATION-INDEPENDENT COMPUTING SYMPOSIUM, 1993, Seiten 1-10, XP000519270

## Beschreibung

Die Erfindung bezieht sich auf die Integration unterschiedlicher strukturell inkompatibler Datenbanksysteme.

Datenbanksysteme spielen in zahlreichen Anwendungen der elektronischen Datenverarbeitung eine große Rolle. Sie bestehen üblicherweise aus der eigentlichen Datenbank (Datenbasis) und einem Datenbankmanagementsystem. Oft sind sie Grundlage umfassender Computerapplikationen, bei denen die in der Datenbank gespeicherten Daten in vielfacher Weise weiterverarbeitet werden.

Ein wichtiges Beispiel im Bereich der Unternehmens-EDV sind sogenannte ERP(Enterprise Resource Planning)-Systeme, wie beispielsweise OLTP-R/3 der SAP AG, Walldorf, Deutschland. Sie ermöglichen die EDV-Unterstützung unterschiedlichster Unternehmensbereiche, wie beispielsweise Personal, Vertrieb, Lagerhaltung etc. auf Basis einer gemeinsamen zentralen Datenbank. Derartige Systeme werden vielfach als "Back-Office-System" bezeichnet.

Ein weiteres wichtiges Beispiel von Datenbanksystemen sind Kundenbetreuungssysteme, die vielfach als SFA(Sales Force Automation)- oder CRM(Customer Relation Management)-Systeme bezeichnet werden. Derartige Systeme sind besonders auf die EDV-Anforderungen der Kundenberatung, Kundenbetreuung und des Vertriebs zugeschnitten. Hierzu gehört, daß die Möglichkeit besteht, Außendienstmitarbeiter des Unternehmens mit einem tragbaren Rechner auszurüsten, der als sogenannter mobiler Klient (mobile client) des Datenbanksystems eine eigene lokale Datenbank mit dem von dem jeweiligen Außendienstmitarbeiter benötigten Daten (beispielsweise über die Kunden aus seinem Bezirk oder den Status der von ihm getätigten Verkäufe) zur Verfügung stellt. Zu einem solchen System (das vielfach als Front-Office-System bezeichnet wird) gehört ein Zentralrechner, der ebenfalls eine Datenbank enthält, in der die Summe der Daten der mobilen Klienten gespeichert ist. Es handelt sich also um ein offline-verteiltes Datenbanksystem. Neben den mobilen Klienten können mit dem Zentralrechner des CRM-Systems auch andere externe Systeme kommunizieren, wie beispielsweise EDV-Systeme von Kunden, die über temporäre oder stationäre Datenverbindungen an den Zentralrechner angeschlossen sind.

Sowohl gebräuchliche Back-office-Systeme als auch gebräuchliche Front-office-Systeme sind außerordentlich komplex. Sie erfordern jeweils leistungsfähige Methoden zur Sicherstellung der Kommunikationsfähigkeit zwischen den verschiedenen Komponenten, der Datenintegrität und der Datensynchronisation, wobei zu berücksichtigen ist, daß die Kommunikation sehr große Benutzerzahlen einschließen kann.

Während diese Probleme für umfangreiche Systeme der genannten Art weitgehend gelöst sind, fehlt es noch an überzeugenden Verfahren, Datenbanksysteme miteinander zu verschmelzen, die strukturell inkompatibel sind, aber zu einem erheblichen Teil die gleichen (Geschäfts-)Daten verwalten. Beispielsweise sind in ERP-Systemen normalerweise umfangreiche Datenbestände über die Kunden des Unternehmens (z.B. Adressen, Ansprechpartner, Daten über erledigte Aufträge, Einkaufskonditionen, aber auch die für die Ersatzteilbelieferung wichtige Maschinenausstattung der Kunden) gespeichert. Weitgehend übereinstimmende Datenbestände werden auch in CRM-Systemen benötigt. In der Praxis haben beide Systeme jedoch eine ganz unterschiedliche wechselseitig inkompatible Datenbankstruktur.

Beispielsweise ist die Preisermittlung (prizing) eine Aufgabe, die in unterschiedlichen Applikationen EDV-unterstützt durchgeführt wird. Obwohl ein einheitlicher geschäftlicher Ablauf (beispielsweise unter Berücksichtigung der Gestehungskosten, der Stückzahl, der Transportkosten und eventueller Sonderkonditionen) zugrundeliegt, ist die Implementierung in unterschiedlichen Datenbanksystemen häufig völlig verschieden, d.h. die Algorithmen (sogenannte "Businesslogik"), die zur Umsetzung der geschäftlichen Vorgänge benutzt werden, sind sehr verschieden. Selbstverständlich besteht jedoch das Bedürfnis, daß eine Preisermittlung in unterschiedlichen Systemen möglichst gleich gehandhabt werden kann und zu dem gleichen Ergebnis führt.

Die Erfindung befaßt sich mit dem Problem, solche strukturell inkompatiblen Datenbanksysteme derartig miteinander zu verschmelzen, daß ein problemloser Datenaustausch in beide Richtungen möglich ist. "Verschmelzen" von Systemen ist dabei in dem Sinn zu verstehen, daß-über die technische Anbindung hinaus - die Datensynchronisation und ein derartiger Austausch der Steuerungslogik möglich ist, daß ein annähernd gleiches Verhalten der verschiedenen Systeme erreicht wird. Ein derartiges Verschmelzen zu einem aus mehreren Teilsystemen bestehenden integrierten Verbundsystem wird hier auch als "semantische Systemintegration" bezeichnet. Sie erfordert unter anderem:
- eine gesicherte technische Anbindung der Systeme,
- die Synchronisation der Nutzdaten der verschmolzenen Systeme,
- die Synchronisation der kundenspezifischen Anpassung (Customizing-Daten) zur Steuerung der verschmolzenen Systeme,
- geeignete Konflikt-Auflösungsverfahren im Falle divergierender Datenänderungen oder anderer Daten-Inkonsistenzen.

Zur Herstellung einer stabilen Verbindung sowohl online als auch offline stehen bewährte Hard- und Software-Techniken zur Verfügung. Eine wesentliche Rolle spielen dabei Queueing-Mechanismen, die sicherstellen, daß jede Dateneinheit genau einmal übertragen wird (guaranteed delivery) und die Daten in einer exakt festgelegten Reihenfolge übertragen werden (In-Order-Processing). Dieser Teilaspekt der semantischen Systemintegration muß nicht näher erläutert werden.

Dagegen stellt die Erfüllung der anderen genannten Erfordernisse ein sehr schwieriges Problem dar, zumal in der Regel davon auszugehen ist, daß unterschiedliche Datenbanksysteme unterschiedlichen "Welten" von Software-Produkten angehören können. Der Erfindung liegt die Aufgabe zugrunde, Systemkomponenten und Verfahren zur Lösung dieser Probleme zur Verfügung zu stellen.

Die Datenmodelle verschiedener Datenbanksysteme sind unterschiedlich. Deshalb müssen ihre Datenstrukturen aufeinander gemappt werden. Außerdem ist eine entsprechende Anpassung der Dateninhalte (z.B. Begriffswahl "Kunde" in einem System entspricht "Abnehmer" in einem anderen System) erforderlich. Diese beiden Funktionen sind Standardaufgabenstellungen beim Datenaustausch zwischen zwei nichtkompatiblen Systemen. Herkömmliche Systemverbindungen beschränken sich auf diese Art der Anbindung. Hieraus ergibt sich, daß Neuerfassungen von Daten, die in dem gesamten Verbundsystem wirksam sein sollen, nur in einem der Systeme, das als zentrales System bezeichnet wird, mit Wirkung für das gesamte Datenbankverbundsystem durchgeführt werden können. Dies ist aber in manchen Fällen, beispielsweise bei der Verschmelzung eines CRM-Systems mit einem ERP-System, nicht ausreichend, weil hier wesentliche neue Daten sowohl im Hauptquartier des Unternehmens (also dem ERP-System) als auch im Rahmen der Kundenbetreuung (also in dem CRM-System) anfallen und nach der Neuaufnahme in dem gesamten Verbundsystem verfügbar sein sollen.

Wenn es möglich sein soll, Neuerfassungen von Daten, die systemübergreifend geshart werden (also nach Durchführung der Neuerfassung in allen Teilsystemen des Verbundsystems zur Verfügung stehen), in jedem Teilsystem des Verbundsystems durchzuführen, bedingt dies, daß jederzeit systemübergreifend ein eindeutiger Primärschlüssel zur Identifikation der Datenobjekte zur Verfügung stehen. Bekannt ist es, derartige Primärschlüssel durch Vergabe von Nummernkreisen oder durch Vergabe von GUID (Global Unified Identifier)-Schlüsseln zu erzeugen. Beide Verfahren sind jedoch nicht universell anwendbar.

Die Nummernkreisvergabe bedingt gleiche Algorithmen zur Schlüsselgenerierung in den beteiligten Datenbanksystemen. Dies kann bei Systemen unterschiedlicher Hersteller nicht gewährleistet werden. Auch in unterschiedlichen Systemen des gleichen Herstellers sind häufig unterschiedliche Schlüsselgenerierungsverfahren implementiert.

Die Erzeugung eines eindeutigen Schlüssels mit Hilfe von GUIDs ist nur anwendbar, wenn alle beteiligten Systeme das GUID-Verfahren nutzen. Auch dies kann in vielen Fällen nicht gewährleistet werden.

Gemäß einem ersten Aspekt der Erfindung wird zur Lösung des daraus resultierenden Problems ein Verfahren zum Austausch von Daten zwischen zwei Datenbanksystemen A und B, wobei jedes der Datenbanksysteme zur eindeutigen Identifizierung gespeicherter Datenobjekte für jedes Datenobjekt mittels einer Primärschlüssel-Erzeugungslogik einen systemspezifischen Primärschlüssel generiert und die Primärschlüssel-Erzeugungslogiken der beiden Datenbanksysteme A und B voneinander unabhängig sind, vorgeschlagen, bei welchem zur Ermöglichung der für systemübergreifend gesharte Neuerfassungen notwendigen eindeutigen Identifizierbarkeit von aus einem Ursprungsdatenbanksystem A in ein Zieldatenbanksystem B transportierten Datenobjekten folgende Schritte durchgeführt werden:
a) Der Primärschlüssel von Datenobjekten, die von dem Ursprungsdatenbanksystem A in das Zieldatenbanksystem B transportiert werden soll, werden mittels eines Primärschlüsselgenerators mit einer Schlüssel-Mapping-Tabelle verglichen, die die Primärschlüssel aller Datenobjekte, für die bereits beide Primärschlüssel generiert wurden, enthält;
b) wenn der Primärschlüssel in der Schlüssel-Mapping-Tabelle noch nicht vorhanden ist, wird automatisch ein Primärschlüssel des Zieldatenbanksystems B erzeugt, in dem Datenobjekt gespeichert und zusammen mit dem Primärschlüssel des Ursprungsdatenbanksystems A in der Schlüssel-Mapping-Tabelle KMT abgelegt.
c) wenn der Primärschlüssel des Ursprungsdatenbanksystems A in der Schlüssel-Mapping-Tabelle gefunden wurde, wird der entsprechende Primärschlüssel des Zieldatenbanksystems B in dem Datenobjekt gespeichert. Dadurch ist die Erzeugung eines systemübergreifend eindeutigen Primärschlüssels (und damit die Durchführung von systemübergreifend gesharten Neuerfassungen) auch in Fällen möglich, bei denen jedes beteiligte Datenbanksystem seine eigene Primärschlüssel-Erzeugungslogik verwendet und diese Logiken nicht aufeinander abgestimmt sind. Man definiert die Schlüssellogiken im Steuerdaten-Speicher (Repository) der beteiligten Systeme. Mittels des Schlüsselgenerators werden die beiden Logiken aufeinander abgebildet.

Gemäß einem zweiten Aspekt richtet sich die Erfindung auf ein Verfahren zum Updaten des Datenbestandes in einem zweiten Datenbanksystem B aufgrund von Änderungen, die in einem ersten Datenbanksystem A im dortigen Datenbestand durchgeführt wurden, wobei der Datenbestand des ersten Datenbanksystem A sowohl für das zweite Datenbanksystems B nicht relevante Daten als auch für das zweite Datenbanksystem A relevante Daten enthält, die Daten in den Datenbanksystemen in Form von Datenobjekten bearbeitet werden, die jeweils einen systemspezifischen Primärschlüssel enthalten, und die Daten in dem zweiten Datenbanksystems B mit beiden systemspezifischen Primärschlüsseln gespeichert werden, bei welchem mindestens ein Teil folgender Verfahrensschritte durchgeführt wird:
a) Abtrennen der für das zweite Datenbanksystems B nicht relevanten Daten D_{R/3} aus dem Datenobjekt;
b) Übertritt des Datenobjektes von dem ersten Datenbanksystem A in das zweite Datenbanksystem B;
c) Erzeugen eines für das Datenbanksystem B spezifischen Schlüssels und Hinzufügen des erzeugten Schlüssels zu dem Datenobjekt und
d) Einbringen des entstandenen Datenobjektes in die Abspeicherungsroutine des zweiten Datenbanksystems B und Abspeichern der in dem Datenobjekt enthaltenen Daten in der Datenbank des zweite Datenbanksystem B.

Bevorzugt werden alle Schritte a) bis d) durchgeführt.

Gemäß einem weiteren Aspekt richtet sich die Erfindung auf ein Verfahren zum Updaten des Datenbestandes in einem ersten Datenbanksystem A aufgrund von Änderungen, die in einem zweiten Datenbanksystem B im dortigen Datenbestand durchgeführt wurden, wobei der Datenbestand des zweiten Datenbanksystems B sowohl für das erste Datenbanksystem A nicht relevante Daten als auch für das erste Datenbanksystem A relevante Daten enthält, die Daten in den Datenbanksystemen in Form von Datenobjekten bearbeitet werden, die jeweils einen systemspezifischen Primärschlüssel enthalten, und die Daten in dem ersten Datenbanksystem A nur mit dessen systemspezifischem Primärschlüssel gespeichert werden, bei welchem mindestens ein Teil folgender Verfahrensschritte durchgeführt wird:
a) Abtrennen der für das erste Datenbanksystem A nicht relevanten Daten D_{MS} aus dem Datenobjekt und Parken dieser Daten in dem zweiten Datenbanksystem B;
b) Übertritt des Datenobjektes von dem zweiten Datenbanksystem B in das erste Datenbanksystem A;
c) Abtrennen des für das zweite Datenbanksystem B systemspezifischen Schlüssels aus dem Datenobjekt und Parken dieses Schlüssels in dem ersten Datenbanksystem A;
d) Einbringen des entstandenen Datenobjektes in die Abspeicherungsroutine des ersten Datenbanksystems A und Abspeichern der in dem Datenobjekt enthaltenen Daten in der Datenbank des ersten Datenbankssystems A.

Bevorzugt werden alle Schritte a) bis d) durchgeführt.

Gemäß einer bevorzugten Ausführungsform wird ein Verfahren zur Neuerfassung oder Änderung von Daten in einem Verbund mehrerer Datenbanksysteme vorgeschlagen, bei welchem zur Vermeidung von Datenkonflikten bei der gesharten Neuerfassung von Daten in einem beliebigen der Datenbanksysteme des Verbundes für jedes zwischen den Datenbanksystemen austauschbare Datenobjekt eines der Datenbanksysteme als führendes System FS definiert wird und bei jeder Neuerfassung oder Änderung in einem geführten Systems GS von Daten des Datenobjekts, die auch zum Datenbestand des führenden Systems FS gehören, ein systemübergreifender Bestätigungsalgorithmus durchgeführt wird, bei dem
a) ein Datenobjekt, das die Änderung beinhaltet, zu dem führenden System FS transportiert wird,
b) in dem führenden System FS eine Rückmeldung in Form einer Bestätigung oder mindestens teilweisen Ablehnung der Änderung erzeugt wird und
c) ein Datenobjekt, das die Rückmeldung enthält, zu dem geführten System GS zurücktransportiert wird.

Die Erfindung wird nachfolgend anhand von in den Figuren dargestellten Ausführungsbeispielen näher erläutert. Die darin beschriebenen Besonderheiten können einzeln oder in Kombination miteinander eingesetzt werden, um bevorzugte Ausgestaltungen der Erfindung zu schaffen. Es zeigen:
- Fig. 1: einen Überblick über das Umfeld eines erfindungsgemäßen Verbundsystems offline-verteilter Datenbanken,
- Fig. 2: einen Überblick über die Architektur eines im Rahmen der Erfindung verwendeten Front-office-Systems am Beispiel eines CRM-Systems,
- Fig. 3: einen typischen Ablauf der Flußsteuerung des Systems nach Figur 2 am Beispiel eines Daten-Upload-Vorgangs,
- Fig. 4: die Struktur von in dem System nach Figur 2 verwendeten Datenobjekten ("BDocs"),
- Fig. 5: die Architektur der in zwei gemäß der Erfindung miteinander verbundenen Systemen bei dem Upload und Deltadownload von Daten wirksamen Komponenten,
- Fig. 6: ein Ablaufdiagramm entsprechend Figur 3 für den Fall eines Deltadownload,
- Fig. 7: die Architektur der für die Erstdatenbefüllung eines der beteiligten Datenbanksysteme mit in dem anderen Datenbanksystem enthaltenen Daten verwendeten Komponenten,
- Fig. 8: eine Prinzipdarstellung zur Erläuterung eines Verfahrens zur systemübergreifenden Bereitstellung der erforderlichen Primärschlüssel,
- Fig. 9: ein Beispiel für die Segmentstruktur eines BDoc und der zugehörigen Schlüssel-Mapping-Tabelle,
- Fig. 10: ein Beispiel für die Struktur eines BDoc entsprechend Figur 9 mit einer etwas komplizierteren Segmentstruktur,
- Fig. 11: eine Darstellung zur Erläuterung der Prinzipien eines für die Erfindung geeigneten Data-Merge-Verfahrens,
- Fig. 12: eine Prinzipdarstellung des Zusammenwirkens der wesentlichsten Komponenten bei der Erstdatenbefüllung,
- Fig. 13: und Fig. 14 zwei Darstellungen zur Erläuterung eines für die Erfindung geeigneten Verfahrens zur Netto-Feld-Übertragung,
- Fig. 15: eine Prinzipdarstellung der wesentlichen Komponenten zur Erläuterung eines Verfahrens der Datensynchronisation,
- Fig. 16: eine Prinzipdarstellung zur Erläuterung der Funktion eines für die Erfindung geeigneten "Compare"-Moduls,
- Fig. 17: eine Prinzipdarstellung eines für die Erfindung geeigneten Verfahrens zur Lösung von Konflikten beim Daten-Update.

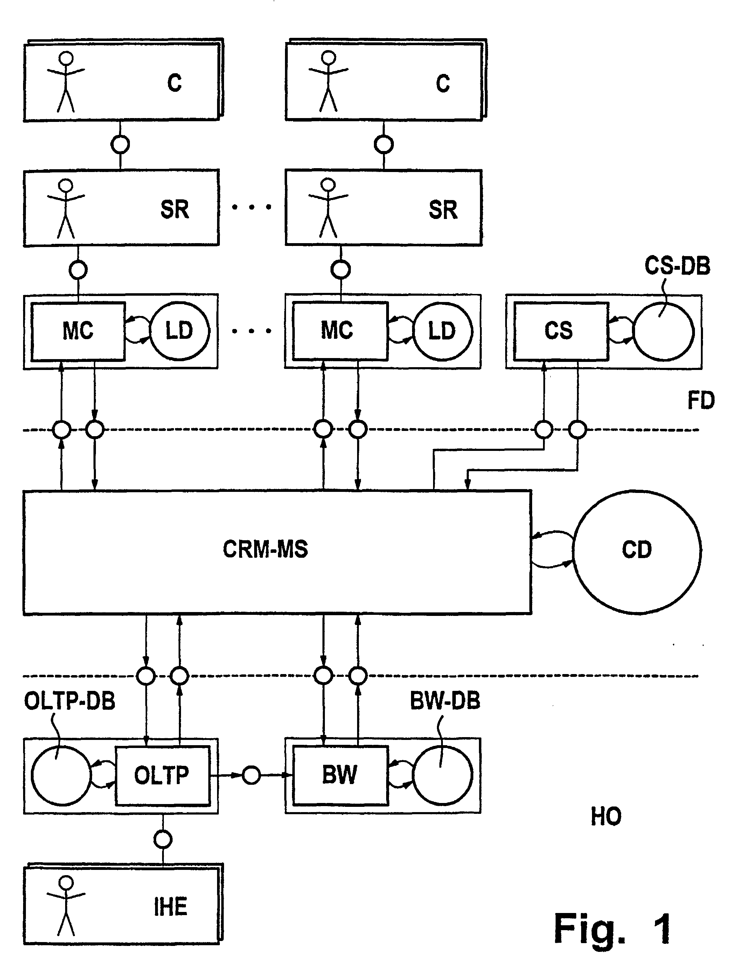

Der in den Figuren beispielhaft dargestellte Anwendungsfall eines erfindungsgemäßen integrierten Verbundsystems bezieht sich auf die Integration einer Vertriebs-EDV-LÖsung (Sales Force Automation; SFA) mit einem zentralen ERP-System. Einen Überblick über das Umfeld eines solchen Systems gibt Figur 1.

Im Außendienst (Field) FD sind Außendienstmitarbeiter (Sales Representative) SR tätig, die die Kunden (Customer) C beraten und z.B. deren Bestellungen aufnehmen. Jeder Außendienstmitarbeiter SR hat einen tragbaren Rechner, der auch als mobiler Klient (Mobile Client) MC bezeichnet wird und zu dem eine lokale Datenbank (Local Database) LD gehört. Die tragbaren Rechner bilden Knoten eines Netzwerkes, die nicht ständig mit diesem verbunden sind und deswegen als Offline-Knoten bezeichnet werden.

Die mobilen Klienten MC stellen beispielsweise Marketing-Information zur Verfügung und speichern unter anderem die Stammdaten (Masterdata) von Kunden und Produkten. Der Außendienstmitarbeiter SR kann z.B. Bestellinformationen eingeben und ist über den Status offener und erledigter Bestellungen informiert. Um diese Funktionen temporär autonom erfüllen zu können, sind alle hierfür erforderlichen Daten in der lokalen Datenbank LD gespeichert.

Im Hauptquartier (Head Office) HO des Unternehmens befindet sich ein Back-office-System, das vorzugsweise Online-Transaction-Processing erlaubt. Im dargestellten Beispielsfall handelt es sich um ein OLTP-R/3-System. Es wird ohne Beschränkung der Allgemeinheit in den Zeichnungen und im nachfolgenden Text mit diesem Begriff bezeichnet. Es enthält eine Datenbank OLTP-DB. Seine Stammdaten werden von Innendienstmitarbeitern (In-House-Employees) IHE gepflegt.

Über ein örtliches Netzwerk (Local Area Network) LAN ist das OLTP-R/3-System mit einem Front-Office-Server verbunden, der, ebenfalls ohne Beschränkung der Allgemeinheit, als (MS Middleware Server) bezeichnet ist. Auch dieses System hat eine Datenbank (Consolidated Database) CD.

Mit dem MS-System können außer den mobilen Klienten MC optional weitere Systeme verbunden sein. Dargestellt ist ein in dem Hauptquartier HO lokalisiertes externes System BW, das beispielsweise als sogenanntes "Business Information Warehouse" die Analyse von für das Unternehmen bedeutsamen Verkaufsinformationen unterstützt. Es hat eine Datenbank BW-DB. Im dargestellten Fall erhält es Daten sowohl von dem Back-office-Server OLTP R/3 als auch von dem MS-System. Im Außendienstbereich FD können beispielsweise Kundensysteme (Customer System) CS, die zusätzliche Knoten in dem Netzwerk bilden, ständig (online) oder temporär (offline) mit dem MS-System verbunden sein. Auf diesem Wege können beispielsweise unmittelbare Bestellungen der Kunden ohne Mitwirkung eines Außendienstmitarbeiters SR abgewickelt werden. Auch das Kundensystem CS hat eine Datenbank CS-DB.

Das dargestellte Netzwerk enthält somit unterschiedliche Datenquellen (mobile Klienten MC, OLTP-R/3-System, optionale externe Systeme BW und Kundensysteme CS), die jedoch nicht unabhängig voneinander sind. Sie werden durch das MS-System verknüpft, das dafür sorgt, daß jeder Teilnehmer die für ihn notwendige und zulässige Information erhält. Im dargestellten Fall erfüllt der Middleware Server MS zugleich diese Verknüpfungsfunktion und bildet den Zentralrechner eines aus ihm und den mobilen Klienten bestehenden CRM-Systems, das ein offline-verteiltes Datenbanksystem ist. Es wird mit dem Zentral-Datenbanksystem OLTP-R/3 verschmolzen. Die Grundsätze der vorliegenden Erfindung sind aber auch auf andere Fälle der Verschmelzung von Datenbanksystemen anwendbar, also insbesondere auf die Verschmelzung von zwei oder mehreren Zentral-Datenbanksystemen oder auf die Verschmelzung von zwei oder mehreren verteilten Datenbanksystemen.

Die Datenbank MS-DB des MS-Systems enthält sämtliche für seine Spezialfunktion (im Beispielsfall Customer Relationship Management CRM) erforderlichen Informationen. Sie wird auch als konsolidierte Datenbank CD bezeichnet, weil sie den Inhalt aller lokalen Datenbanken LD der tragbaren Rechner (zum Zeitpunkt des letzten Datenaustausches) enthält. Dadurch ist es möglich, die lokalen Datenbanken LD mit den erforderlichen Daten zu versorgen, um insbesondere Datenänderungen zu übermitteln oder erforderlichenfalls auch die lokalen Datenbanken LD wiederherzustellen.

Die tragbaren Rechner werden in Abständen, beispielsweise am Abend jeden Tages, z.B. über Telefonleitungen, das Internet oder ein Intranet, mit dem MS-System verbunden. Dabei werden die seit der letzten Verbindung gesammelten Daten an das MS-System übertragen. Außerdem übernimmt der tragbare Rechner bei dieser Gelegenheit seine eigenen verarbeiteten Daten des jeweils vorausgegangenen Zeitraums und neu eingegebene Daten anderer tragbarer Rechner und anderer Systeme (soweit erforderlich).

Die Nutzdaten der miteinander verbundenen Systeme werden (da sie sich in dem Beispielsfall auf geschäftliche Vorgänge wie Kunden, Aufträge und dergleichen beziehen) als Businessdaten bezeichnet. In dem OLTP-R/3-System werden daraus Businessobjekte ("BDocs") gebildet, die als Datencontainer für die weitere Bearbeitung dienen. Beispielsweise enthält ein Businessobjekt für einen bestimmten Auftrag alle zu dem Auftrag gehörigen in der Datenbank OLTP-DB gespeicherten Daten, unabhängig davon, wie sie in deren logischer Struktur (in Tabellen einer relationalen Datenbank) vorliegen. Diese Struktur ist für das OLTP-R/3-System bekannt und wird in ähnlicher Weise auch in anderen Back-office-Systemen eingesetzt.

Die Steuerdaten, die zur Verarbeitung der Businessdaten in den beteiligten Systemen erforderlich sind, werden in einem logisch gesonderten Teil der jeweiligen Datenbanken gespeichert, der als Repository bezeichnet wird.

Hinsichtlich der Übertragung an das OLTP-R/3-System sind die Übertragungskriterien weitgehend statisch. Sie werden einmal festgelegt und bleiben unverändert, soweit nicht Änderungen in den Geschäftsabläufen des jeweiligen Unternehmens in größeren Zeitabständen eine Änderung erfordern.

Dagegen ist die Datenübertragung an die tragbaren Rechner hochgradig dynamisch. Beispielsweise ändern sich die Zuständigkeiten der Außendienstmitarbeiter für bestimmte Verkaufsbezirke möglicherweise häufig. Aus solchen Änderungen ergibt sich jeweils eine Änderung der Kriterien für die Datenübertragung, weil jeweils nur das Minimum der notwendigen Daten an die tragbaren Rechner übertragen werden soll. Aus dem gleichen Grund müssen obsolet gewordene Daten in den tragbaren Rechnern gelöscht werden, während neuerdings relevant gewordene Daten hinzugefügt werden müssen. Die Datenübertragungskriterien werden vorzugsweise als sogenannte Publikationen und Subskriptionen in dem MS-System gespeichert. Der Prozeß des Updatens der Übertragungskriterien und der Daten an die mobilen Klienten MC wird nachfolgend als Realignment bezeichnet.

Da bestimmte Daten für mehr als einen tragbaren Rechner von Bedeutung sind, ist es notwendig, sie bei der Übertragung an die tragbaren Rechner zu kopieren. Diese Übertragung an mehr als einen Empfänger wird nachfolgend als Replication bezeichnet.

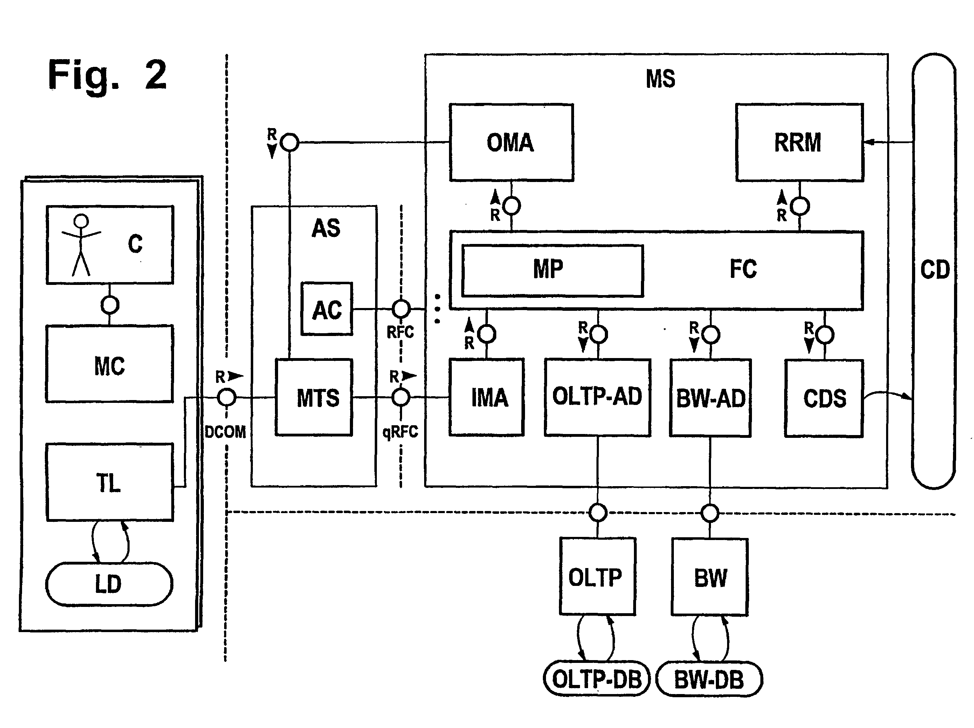

Figur 2 gibt einen Überblick über die Architektur des MS-Systems. Auf der linken Seite sind die mobilen Klienten MC und unten das OLTP-R/3-System und das externe System BW dargestellt. Die übrige Figur zeigt das MS-System einschließlich seiner Datenbank CD und eines zugehörigen Nachrichtenübermittlungsservers (Message Transfer Server) MTS.

Das MS-System ist vorzugsweise auf Basis der R/3 Technologie implementiert. Demzufolge können seine Funktionen auf mehrere Maschinen verteilt sein, insbesondere können eine gesonderte Maschine für die Datenbank und eine oder mehrere Maschinen zur Bearbeitung von Anforderungen eingesetzt werden. Die Maschine, auf der der Nachrichtenübermittlungsserver läuft, wird insgesamt als Administrationsstation (Admin Station) AS bezeichnet. Der Nachrichtenübermittlungsserver MTS und die zugehörige Administrationskonsole (Admin Console) AC sind vorzugsweise auf einer Maschine, die unter Windows NT läuft, installiert. Die daraus resultierende mögliche Maschinengrenze ist in der Figur gestrichelt dargestellt.

Für den Transport der Daten in dem Front-office System werden Datencontainer eingesetzt, die als BDocs bezeichnet werden. Sie dienen auch der Kommunikation zwischen den mobilen Klienten MC und dem MS-System. Dabei sind verschiedene Arten von BDocs zu unterscheiden:
- Transaktionelle BDocs werden benutzt, um Transaktionsergebnisse und Statusinformationen zwischen den tragbaren Rechnern MC und dem Front-Office-Server CRM-MS zu übertragen. Sie können wie folgt weiter unterschieden werden:
   Transaktions-BDocs transportieren Transaktionsergebnisse von den mobilen Klienten MC zu dem MS-System. Der mobile Klient bildet dabei ein BDoc, das das Ergebnis der Transaktion enthält und sendet es an das MS-System.
   Bestätigungs-BDocs (Confirmation BDoc) zeigen die erfolgreiche Verarbeitung eines Transaktions-BDocs durch das MS-System an. Wenn die Verarbeitung eines Transaktions-BDocs erfolgreich ist, wird der Status des BDoc entsprechend geändert und das BDoc wird an den mobilen Klienten, von dem es versandt wurde, als Bestätigungsnachricht zurückgeschickt. Diese Bestätigungsnachricht enthält auch zusätzliche Daten, die beispielsweise von dem OLTP-R/3-System zur Verfügung gestellt wurden oder geänderte Werte der konsolidierten Datenbank CD. Das Bestätigungs-BDoc enthält dabei entweder nur geänderte Werte oder alle Werte.
   Import-BDocs transportieren Transaktionsergebnisse eines anderen mobilen Klienten MC oder eines externen Systems von dem MS-System an den mobilen Klienten MC. Auch die Import-BDocs enthalten nur geänderte Werte oder alle Werte. Import-BDocs werden auch benutzt, um Datenänderungen, die von anderen Quellen als den mobilen Klienten MC stammen, von dem MS-System an die mobilen Klienten zu übertragen.
   Fehler-BDocs (Error BDocs) zeigen an, daß ein Fehler in dem MS-System bei der Verarbeitung eines Transaktions-BDocs aufgetreten ist. In diesem Fall wird ein Fehlersegment in das BDoc eingefügt und es wird als Fehler-BDoc an den aussendenden mobilen Klienten MC zurückgeschickt. Das Fehlersegment kann unterschiedliche Records enthalten, um verschiedene Fehlerkonditionen anzuzeigen. Das Fehler-BDoc enthält auch die ursprünglichen Werte als "Bilder des vorherigen Zustandes" (before images). Alle Felder sind mit dem aktuellen Inhalt der konsolidierten Datenbank CD gefüllt.
- Service-orientierte BDocs werden benutzt, um Binärdaten von dem MS-System an den tragbaren Rechner MC zu übertragen.
- Massenorientierte BDocs (Bulk oriented BDocs) werden benutzt, um große Datenmengen von dem MS-System zu dem mobilen Klienten MC zu transportieren, z.B. bei der Erstdatenbefüllung.

Weiter sind die BDocs hinsichtlich der transportierten Inhalte in unterschiedliche BDoc-Typen zu differenzieren. BDoc-Typen können beispielsweise "Kunde", "Auftrag" etc. sein.

Eine nähere Erläuterung der BDocs und insbesondere deren Struktur wird weiter unten gegeben.

Die Datenverarbeitung in dem MS-System erfolgt mittels Funktionsmodulen, die als "Service" bzw. als "Adapter" bezeichnet werden. Ein Service stellt eine bestimmte Funktion, die auf ein BDoc angewendet werden kann, zur Verfügung. Ein Adapter ist ein spezieller Typ von Service, der zusätzlich die Verbindung zu einem System außerhalb des MS-Systems ermöglicht.

Die Kommunikation der mobilen Klienten sowohl mit dem Middleware-Server MS als auch mit ihrer lokalen Datenbank LD erfolgt ausschließlich über eine Transaktionsschicht (Transaction Layer) TL. Weitere Einzelheiten über den Datenaustausch zwischen dem Middleware-Server MS und den mobilen Klienten als Beispiel für teilreplizierte Datenbanknetzwerksysteme können der internationalen Patentanmeldung PCT/DE00/01552 entnommen werden, deren Inhalt durch Bezugnahme zum Gegenstand der vorliegenden Anmeldung gemacht wird.

Die Funktionen der in Figur 2 dargestellten Komponenten des MS-Systems lassen sich wie folgt charakterisieren.

Der Nachrichtenübermittlungsserver MTS empfängt BDocs von den mobilen Klienten MC und übermittelt BDocs an diese. Die Datenübertragung wird jeweils durch einen mobilen Klienten MC eingeleitet. Beispielsweise kann hierzu die Kommunikationstechnologie DCOM von Microsoft verwendet werden.

Die Übertragung von BDocs von den mobilen Klienten MC an das MS-system erfolgt mittels eines Adapters für eingehende Nachrichten (Inbound Message Adapter) IMA, während in umgekehrter Richtung übertragene Nachrichten mittels eines Adapters für ausgehende Nachrichten (Outbound Message Adapter) OMA übertragen werden. Diese Datenübermittlungen erfolgen mittels eines Protokolls, das als qRFC (queued Remote Function Call) bezeichnet wird. Dabei handelt es sich um ein remote function call Protokoll, bei dem queues verwendet werden, um die Reihenfolge der Bearbeitung festzulegen.

Die zentrale Komponente des MS-Systems ist die Flußsteuerung (Flow Control) FC. Die Flußsteuerung FC bewirkt die Verarbeitung der BDocs, indem sie eingehende BDocs in der richtigen Reihenfolge zu den Services und Adaptern leitet und wenn erforderlich eine Fehlerbehandlungsprozedur auslöst. Dies erfolgt für alle Services und Adapter über das gleiche Interface. Der Hauptparameter in dem Interface ist wiederum ein BDoc. Der Flow ist BDoc-Typ spezifisch in einem Steuerdatenspeicher (Repository) definiert.

Externe Systeme wie das OLTP-R/3-System und das BW-System sind jeweils über einen spezifischen Adapter OLTP-AD bzw. BW-AD mit dem MS-System verbunden. Jedes externe System hat also seinen eigenen Adaptertyp, der ebenfalls BDocspezifisch in dem Reporsitory definiert ist. Das Protokoll und die Datenstruktur des Übertragungskanals zwischen einem Adapter und dem daran angeschlossenen externen System ist für den Typ des externen Systems spezifisch.

Ein Datenbankservice (Consolidated Database Service) CDS dient zur Speicherung entsprechender Daten in der konsolidierten Datenbank CD. Der Service CDS führt keine Prüfungen auf Datenkonsistenz durch, wenn er Daten in die Datenbank CD schreibt. Derartige Checks müssen von den Komponenten durchgeführt werden, die Daten an das MS-System übertragen (beispielsweise die mobilen Klienten MC oder das OLTP-R/3-System). Zum Lesen der Datenbank CD verwenden die anderen Services nicht den Service CDS, sondern einen in der Figur nicht dargestellten Extrakt-Handler, der von Services, Adaptern oder anderen Handlern aufgerufen wird.

Der Replications- und Realignment Modul RRM hat zwei Hauptaufgaben. Der Replicationsteil übernimmt bearbeitete BDocs und bestimmt deren Empfänger. Zur schnelleren Bearbeitung wird die hierzu erforderliche Information aus Lookup-Tabellen gelesen. Wenn der Replicationsteil feststellt, daß die Lookup-Information infolge eines gegenwärtig verarbeiteten BDocs geändert werden muß, löst er den Realignment-Handler aus. Der Realignment-Handler erzeugt die erforderliche Lookup-Information, indem er die Replicationsregeln auswertet. Außerdem stellt der Realignment-Handler neue Daten für Empfänger zur Verfügung und gibt Befehle zur Löschung unnötiger Daten. Hierzu bedient er sich des Extract Handlers.

Die Administrationskonsole AC wird benutzt, um den MS-Server kundenspezifisch anzupassen (Customizing) und das Gesamtsystem hinsichtlich des logischen Datenflusses zu administrieren.

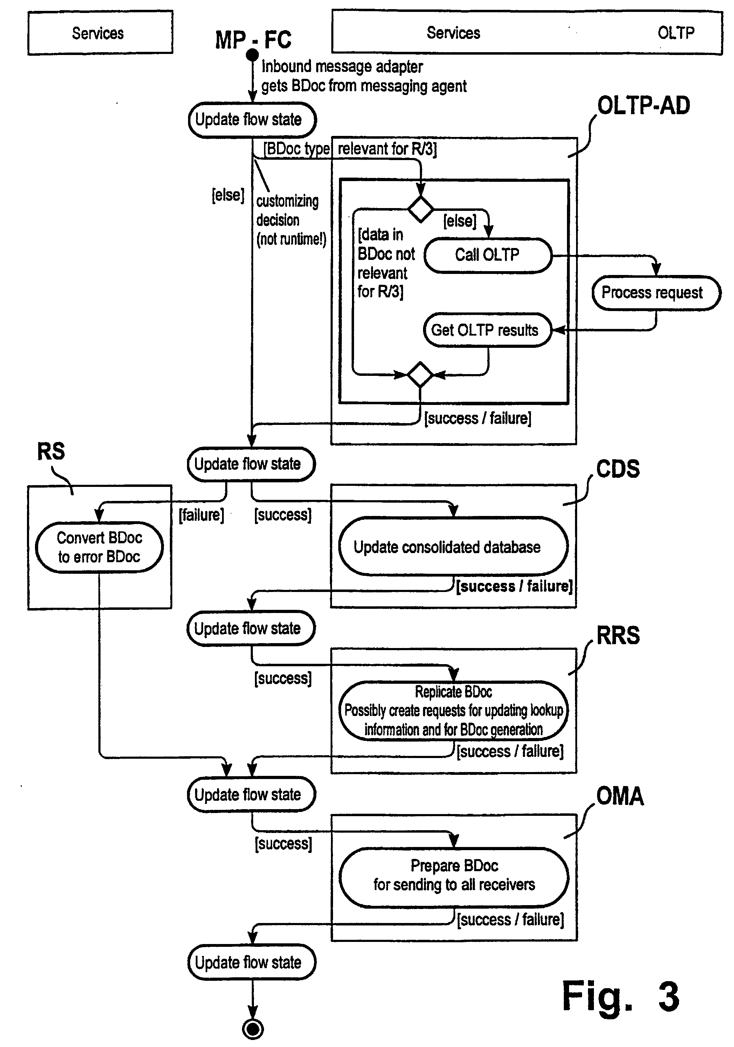

Figur 3 zeigt am Beispiel eines Daten-Upload-Vorgangs einen typischen Ablauf der Flußsteuerung des MS-Systems. Dabei sind die von dem Nachrichtenprozessor (Message Processor) MP der Flußsteuerung FC durchgeführten Schritte in der mit MP-FC überschriebenen Spalte dargestellt. Die erste und dritte Spalte zeigen die von Services durchgeführten Bearbeitungsschritte. In der letzten Spalte sind Bearbeitungsschritte angegeben, die von dem OLTP-R/3-System ausgeführt werden.

Der Fluß beginnt, wenn der Nachrichtenübermittlungsserver MTS (über RFC) den Adapter für eingehende Nachrichten IMA aufruft, weil ein neues BDoc empfangen wurde. Der Adapter für eingehende Nachrichten IMA startet den Nachrichtenprozessor MP-FC.

Der auszuführende Fluß wird von dem Nachrichtenprozessor MP bestimmt. Im wesentlichen sind zwei Flußverläufe zu unterscheiden, einer für die Bearbeitung von BDoc-Typen, die zumindest zum Teil für das OLTP-R/3-System relevant sind, und einer für andere BDocs (die nur innerhalb des MS-Systems zirkulieren).

In Abhängigkeit von der in einem Repository für die jeweiligen BDoc-Typen gespeicherten Flußdefinition bestimmt der Nachrichtenprozessor MP den ersten Service bzw. Adapter, der aufgerufen wird. Für Typen von BDocs, die (zumindest zum Teil) für das OLTP-R/3-System relevant sind, wird als erster Service der OLTP-R/3 Adapter OLTP-AD aufgerufen. Für andere BDocs wird der OLTP-R/3 Adapter nicht aufgerufen. Die Entscheidung, ob der OLTP-R/3 Adapter für einen Typ von BDoc aufgerufen wird, ist bei der Festlegung des Flusses getroffen worden, wird also nicht innerhalb des Flusses getroffen.

Wenn der OLTP-R/3 Adapter OLTP-AD aufgerufen wurde, bestimmt er, ob das BDoc tatsächlich für das OLTP-R/3-System relevant ist. Dies ist nicht notwendigerweise der Fall, weil die Relevanz für das OLTP-R/3-System nicht nur von dem Typ des BDoc abhängt, sondern auch von dessen Inhalt abhängen kann. Ein Beispiel sind BDocs des Businessobjekt-Typs "Kunde". Wenn derartige BDocs Informationen über Kunden enthalten, werden sie an das OLTP-R/3-System geschickt. Wenn sie jedoch Informationen über Vertriebskontakte enthalten, werden sie nur in dem MS-System gespeichert.

Wenn der OLTP-R/3 Adapter festgestellt hat, daß ein BDoc für das OLTP-R/3-System relevant ist, sendet er einen Aufruf dorthin und unterbricht den laufenden Fluß. Nach Beendigung der Bearbeitung in dem OLTP-R/3-System sendet dieses einen Aufruf an den OLTP R/3 Adapter, der das Ergebnis übernimmt und den Fluß wieder startet, indem er den Nachrichtenprozessor MP der Flußsteuerung FC aufruft.

Der Nachrichtenprozessor MP-FC ermittelt, welcher Service als nächstes aufzurufen ist. Falls der OLTP-R/3 Adapter OLTP-AD festgestellt hat, daß das BDoc nicht relevant für das OLTP-R/3-System ist, gibt er die Kontrolle an den Nachrichtenprozessor MP-FC zurück, der auch in diesem Fall den nächsten aufzurufenden Service bestimmt.

Normalerweise wird nach dem OLTP-R/3 Adapter der Datenbank-Service CDS aufgerufen. Er macht die in dem BDoc enthaltenen Daten in der konsolidierten Datenbank CD persistent.

Wenn die Daten erfolgreich in die konsolidierte Datenbank CD geschrieben wurden, wird in der Regel der Replikationund Realignment-Service RRM aufgerufen. Eine Funktion dieses Services besteht darin, zu prüfen, ob das BDoc die Replikationsinformation beeinflußt. Falls dies der Fall ist, wird für den Realginment-Handler ein Auftrag erzeugt, die Lookup-Information zu aktualisieren und ein BDoc zur Verteilung der Businessdaten zu erzeugen. Die zweite Aktion des Replikation- und Realignment-Service RRM besteht darin, dem aktuellen BDoc eine Empfängerliste hinzuzufügen.

Schließlich wird der Adapter für abgehende Nachrichten OMA aufgerufen, um die BDocs für die Übermittlung an ihre Empfänger mittels des Nachrichtenübermittlungsservice MTS vorzubereiten.

Für den Fall, daß der Upload fehlschlägt, wird ein Reject-Service RS aufgerufen. Das BDoc wird als Fehler-BDoc (also als ein BDoc, welches Fehlerinformationen enthält) markiert. Bei der Update-Operation liest der Reject-Service die gültigen Werte aus der konsolidierten Datenbank CD. Bei allen Operationen werden die jeweils vorherigen Zustände der mobilen Klienten MC markiert. Das BDoc wird dann an den tragbaren Rechner, von dem es ausgesandt wurde, zurückgesandt. Dort wird die entsprechende Transaktion erneut ausgeführt.

In Figur 3 ist - mit Ausnahme des Reject-Service RS - nur der Erfolgs-Pfad eingezeichnet. Selbstverständlich ist auch eine Fehlerbearbeitungsroutine vorgesehen, die hier jedoch nicht näher beschrieben wird.

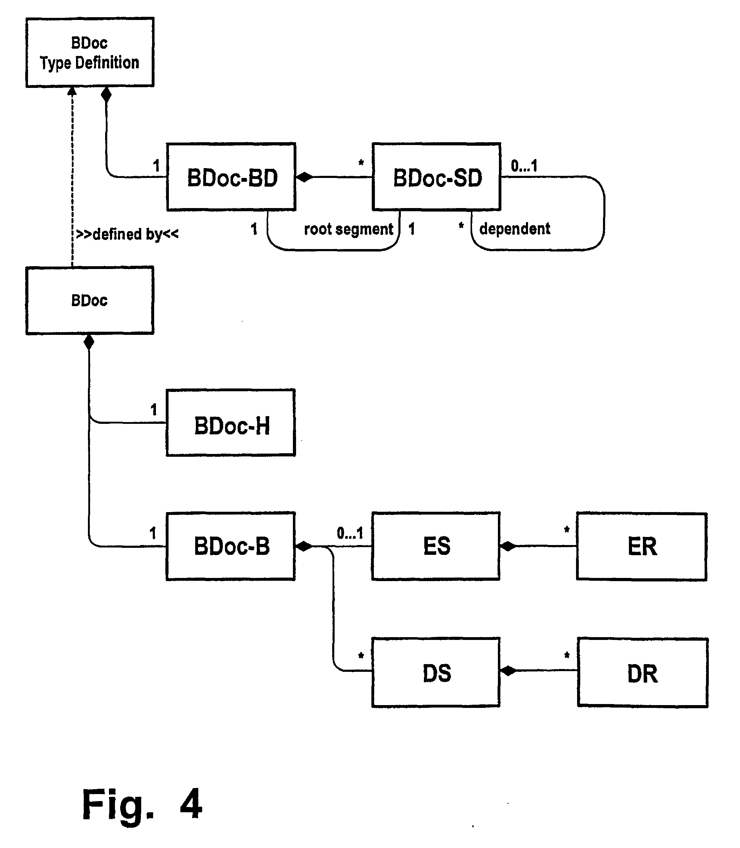

Anhand von Figur 4 wird die Struktur der BDocs näher erläutert. Darin zeigt der obere Teil die Struktur der Definition des BDoc-Typs, die in dem Repository des MS-Systems abgespeichert wird. Die ebenfalls in dem Repository abgespeicherte Struktur des BDocs selbst ist im unteren Teil dargestellt.

Das BDoc besteht aus dem BDoc-Kopf(Header) BDoc-H und dem BDoc-Körper(Body) BDoc-B. Der BDoc-Header BDoc-H enthält Steuerungsinformationen wie beispielsweise den Typ ("Kunde", "Auftrag" ...) des BDocs, dessen Absender (Mobile Klienten MC) und eine Zeitmarkierung (Time Stamp). Aus Performance-Gründen ist es vorteilhaft, wenn er außerdem ein Duplikat des Primärschlüssels enthält.

Die Daten sind in dem BDoc-Körper BDoc-B enthalten. Ein Daten-Rekord (Data Record) DR enthält die eigentlichen Daten. Die Struktur ist in der Definition des zugehörigen Datensegmentes (Data Segment) DS definiert. Die Segmente bilden eine Art Tabellenansicht der tatsächlichen physischen Tabellen. Optional enthält das BDoc auch ein Fehlersegment ES (Error Segment) mit einem oder mehreren Fehler-Rekords ER (Error Record).

Die Datenbereiche haben eine festgelegte Länge. Sie bestehen aus einem Schlüssel und Datenfeldern. Wenn sie eine Löschinformation enthalten, enthält nur das Schlüsselfeld gültige Daten. Wenn sie "insert"- oder "update"-Informationen enthalten, enthalten entweder alle Felder gültige Daten oder unveränderte Felder enthalten einen Voreinstellungswert (beispielsweise 0.0). Um anzuzeigen, ob ein Feld gefüllt oder unbenutzt ist, werden sogenannte "Sende-Bits" benutzt. Primärschlüssel und Felder, die bei Replikation und Realignment berücksichtigt werden müssen, werden immer gesendet (unabhängig davon, ob sie geändert wurden). Sende-Bits werden nur gesetzt, wenn der Wert tatsächlich geändert wurde.

Die Definition des BDoc-Typs, also die Information über die für den jeweiligen BDoc-Typ spezifische Struktur aus hierarchisch geordneten Elementen, ist in der BDoc-Typ-Definition ("BDoc Type Definition") enthalten, die aus einer BDoc-Körper-Definition BDoc-BD und BDoc-Segment-Definitionen BDoc-SD besteht. Die BDoc-Körper-Definition BDoc-BD enthält genau ein Root-Segment, das nur einen einzigen Daten-Rekord enthält. Diese Bedingung muß eingehalten werden, um sicherzustellen, daß die in dem BDoc enthaltenen Informationen individuell an die jeweiligen Knotensysteme übermittelt oder in anderer Weise bearbeitet werden können. Beispielsweise darf in einem BDoc des Typs "Kunde" nur Informationen über einen einzigen Kunden gespeichert sein, damit die Kundeninformation individuell und gezielt für jeden einzelnen Kunden den entsprechenden Knotensystemen zugeleitet werden kann. Die Daten-Records nachgeordneter Segmente enthalten abhängige Daten, beispielsweise über die Maschinenausstattung des Kunden. Hier können selbstverständlich zu einem Segment mehrere Records vorhanden sein.

Während die Segmente in der Definition des BDoc-Typs hierarchisch strukturiert sind, gibt es bei der physischen Wiedergabe der BDocs keine derartige Hierarchie. Die hierarchische Abhängigkeit ist in den BDocs dadurch enthalten, daß die Daten-Records DR abhängiger Segmente den Schlüssel ihrer übergeordneten Daten-Records enthalten. Im Fall transaktionaler BDocs ist darüber hinaus (abgesehen von dem optionalen Fehlersegment ES mit Fehler-Record (Error Record) ER) ein unabhängiges Segment vorgesehen, daß als Root-Segment bezeichnet wird.

Wenn geänderte Daten an das MS-System übermittelt werden, können die Werte, die der mobile Klient MC vor der Änderung hatte, für das MS-System von Interesse sein. Solche "Bilder des vorhergehenden Zustands" (before images) werden in eigenen Datenbereichen übermittelt, die entsprechend gekennzeichnet sind.

Service-orientierte BDocs werden verwendet, um Daten des externen Systems BW und Installationsdateien an einen mobilen Klienten MC zu übermitteln. Der Körper eines Service-orientierten BDoc besteht aus einem Root-Segment mit allgemeiner Information und einem Memo-Segment, das die binären Daten enthält.

Massenorientierte BDocs werden für die anfängliche Einrichtung eines mobilen Klienten (Initial Client Setup) und für den Datentransport während des Realignment benutzt. Auch massenorientierte BDocs sind Typ-spezifisch definiert (also z.B. für den Objekttyp "Kunde"). Sie unterliegen jedoch nicht der Restriktion, daß in ihrem Root-Segment nur ein Record enthalten sein darf. Beispielsweise kann also ein massenorientiertes BDoc die Daten einer Vielzahl von Kunden auf einmal übertragen.

Der OLTP-R/3 Adapter OLTP-AD verbindet das OLTP-R/3-System mit dem MS-System. Er dient dazu, Daten in beide Richtungen zu transportieren. Wenn Daten, beispielsweise die Bestellung eines Kunden, in den mobilen Klienten MC eingegeben und dann an das OLTP-R/3-System weitergeleitet werden, wird dies als "Upload" bezeichnet. Wenn Daten in das OLTP-R/3-System eingegeben und von dort zu dem MS-System weitergeleitet werden, wird dies als Download bezeichnet.

Es sind drei Typen von Downloads zu unterscheiden. Mittels einer Erstdatenbefüllung (Initial Download) wird die konsolidierte Datenbank CD des MS-Systems zu Beginn des Betriebs mit Daten von dem OLTP-R/3-System gefüllt. Ein Deltadownload findet statt, wenn Online-Benutzer Daten in das OLTP-R/3-System eingeben und das geänderte Objekt an das MS-System weitergeleitet wird. Ein derartiger Deltadownload ist nicht für alle Datenarten möglich. Sofern diese Funktion nicht zur Verfügung steht wird ein dritter Downloadmechanismus eingesetzt, der nachfolgend als synchronisationsmechanismus bezeichnet wird.

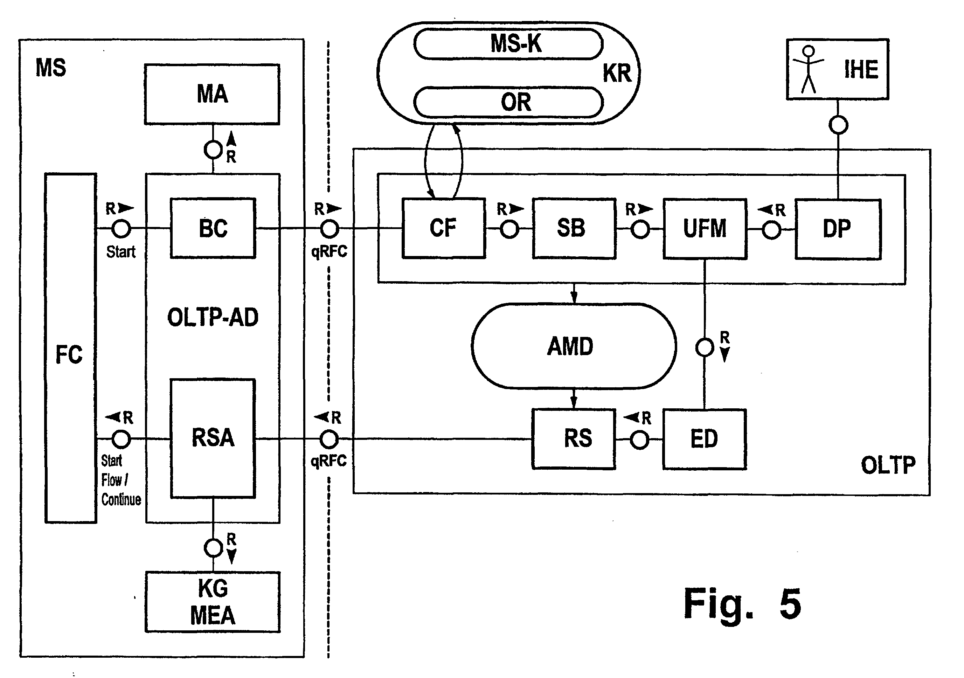

Die bei dem Upload und dem Deltadownload wirksamen Komponenten des MS-Systems und des OLTP-R/3-Systems sind in Figur 5 dargestellt. Bestandteile des MS-Systems sind die Flußsteuerung FC zur Koordination der zur Bearbeitung der BDocs notwendigen Prozeßschritte, der OLTP-R/3 Adapter OLTP-AD, sowie drei Agenten, die als Schlüsselgenerator (Keygenerator) KG, Mapping-Agent MA und Merging-Agent MEA bezeichnet werden. Diese Agenten erfüllen Hilfsfunktionen für den OLTP-R/3 Adapter.

Bestandteil des MS-Systems ist ein Calling Frame CF zum Aufruf von Standard-BAPIs (Business Application Programming Interface) SB, die während der Bearbeitung der BDocs aufgerufen werden können. Die Standard-BAPIs rufen Update-Funktionsmodule UFM auf, um Änderungen persistent zu machen. Diese Update-Funktionsmodule UFM werden auch von Dialog-Programmen DP aufgerufen.

Die Update-Funktionsmodule UFM erzeugen bei jeder Änderung ein Event, das an den Event Distributor ED übermittelt wird. Als Reaktion auf eine solche Übermittlung startet der Event Distributor alle Subskribenten. Unter anderem wird dadurch der als Subskribent eingetragene Ergebnisübermittler (Results Sender) RS aufgerufen. Die modifizierten Daten werden von dem Ergebnisübermittler RS an das MS-System übermittelt. In einem Speicherbereich Schlüssel-Referenzen (Key References) KR sind Schlüssel K_{MS} des Front-office-Systems MS und Objekt-Referenzen OR gespeichert. Ein Speicherbereich Ergänzungsdaten (Additional MS-Data) AMD enthält Daten, die durch das OLTP-R/3-System transportiert werden müssen, aber für dieses selbst nicht relevant sind (beispielsweise Schlüssel des Front-office-Systems). Von dem MS-System werden keine Daten an das OLTP-R/3-System übermittelt, die für dieses nicht relevant sind.

Der Calling Frame CF und der Ergebnisübermittler RS sind die einzigen Bestandteile des OLTP-R/3-Systems, die für die hier beschriebenen Funktionen zusätzlich implementiert wurden.

Ein Upload erfolgt folgendermaßen. In dem MS-System wird ein BDoc bearbeitet. Als Schritt dieser Bearbeitung wird der OLTP-Adapter OLTP-AD aufgerufen. Er entscheidet, ob das BDoc für das OLTP-R/3-System relevant ist. Falls es relevant ist, markiert der BAPI Caller BC das BDoc entsprechend. Dadurch wird gewährleistet, daß nicht auch andere BDocs in der gleichen queue bearbeitet werden. Auch solche für das OLTP-R/3-System irrelevante BDocs müssen in der queue sein, weil möglicherweise eine Abhängigkeit eines BDocs in der queue zu vorausgehenden BDocs besteht. Die Struktur des BDocs wird auf die Parameterstrukturen des entsprechenden BAPI des OLTP-R/3-Systems gemappt. Dann wird der Calling Frame dieses BAPI in dem OLTP-R/3-System aufgerufen.

Eine erste Aufgabe des Calling Frame besteht darin, eine Doppelbearbeitung zu vermeiden. Wenn gemäß dem BAPI ein neues Objekt erzeugt werden soll, prüft der Calling Frame, ob das Objekt schon existiert und auf eine entsprechende Anforderung des MS-Systems erzeugt wurde. Falls dies der Fall ist, werden statt der Neuerzeugung eines Businessobjektes die bereits bearbeiteten Daten extrahiert und an das MS-System zurückübermittelt. Eine zweite Aufgabe des Calling Frame besteht darin, das erforderliche Mapping zwischen den Schlüsseln und Objektreferenzen des MS-Systems und den Schlüsseln und Objekt-Referenzen des OLTP-R/3-Systems sicherzustellen. Eine dritte Aufgabe ist das Handling der Commit-Zyklen. Dadurch wird sichergestellt, daß die BAPI-Verarbeitung in einem einzigen Commit-Zyklus abläuft. Infolgedessen findet das Abspeichern der Daten in dem Back-office-System OLTP-R/3 und deren Übergabe an das Front-office-System MS in einer gemeinsamen Verarbeitungseinheit statt.

Die Hauptfunktion des Calling Frame CF besteht darin, das Standard-BAPI SB aufzurufen. Zu diesem Zweck enthält der Calling Frame alle Informationen, die erforderlich sind, um die Struktur eines von ihm empfangenen BDoc in die Struktur der universellen Schnittstelle BAPI umzusetzen. Das BAPI bearbeitet die Daten des BDoc und enthält Aufrufe zu Update-Funktionsmodulen UFM. Diese Funktionsmodule beginnen mit ihrer Arbeit, wenn der Calling Frame einen Commit-Befehl an das Standard-BAPI gibt. Die Update-Funktionsmodule machen die Datenänderungen auf der Datenbank persistent. Außerdem erzeugen sie ein Event, das an die Abonnenten des Event-Distributors ED verteilt wird. Einer dieser Abonnenten ist der Ergebnisübermittler RS. Er erhält die geänderten Daten als Parameter des erzeugten Events, mischt sie mit den Ergänzungsdaten AMD und übermittelt sie an das MS-System.

In dem MS-System mapped ein Ergebnis-Save-Agent RSA die empfangenen Ergebnisse zurück in BDoc-Strukturen. Der Merging Agent MEA mischt die aus dem OLTP-R/3-System kommenden Ergebnisse mit den BDocs in dem MS-System. Danach startet der Ergebnis-Save-Agent RSA die Flußsteuerung für die BDocs, indem er den Status der BDocs ändert in "OLTP Complete".

Hinsichtlich der Flußsteuerung zur Bearbeitung der BDocs wird ergänzend auf die obigen Erläuterungen anhand von Figur 3 verwiesen.

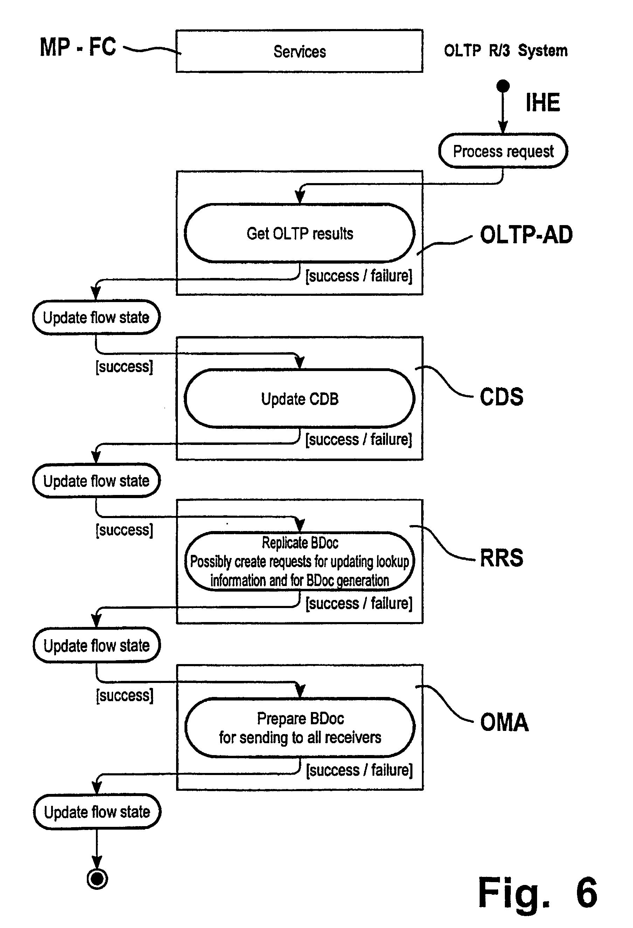

Der Prozeß eines Deltadownload (Überführung von Daten, die direkt in das OLTP-R/3-System eingegeben wurden und dann in das MS-System überführt werden) ist dem Upload sehr ähnlich. Figur 6 zeigt die vollständige Flußsteuerung bei der Bearbeitung eines BDoc, das infolge eines Deltadownload erzeugt wurde. Die Architektur entspricht Figur 5.

Der Innendienstmitarbeiter IHE, der online über das Dialogprogramm DP mit dem OLTP-R/3-System kommuniziert, erzeugt ein Businessobjekt. Das Dialogprogramm DP ruft die Update-Funktionsmodule UFM auf und beginnt mit seiner Arbeit. Die Update-Module erzeugen die Events und der Ergebnis-Übermittler RS ruft den Ergebnis-Save-Agenten in dem MS-System auf. Im Gegensatz zu dem Upload-Prozeß sind keine zusätzlichen MS-Daten vorhanden, die der Ergebnisübermittler RS an das MS-System übermitteln müßte. Fehlende MS-Daten, wie beispielsweise MS-Schlüssel für neu erzeugte Objekte werden von dem Schlüsselgenerator KG erzeugt, der seinerseits von dem Ergebnis-Save-Agenten RSA getriggert wird. Für die von dem OLTP-R/3-System empfangenen Daten wird ein neues BDoc erzeugt und die Flußsteuerung wird gestartet, um den entsprechenden Steuerungsfluß, wie in Figur 6 dargestellt, abzuarbeiten.

Um vor Beginn des produktiven Betriebes die Datenbank CD des MS-Systems zu füllen, ist eine Erstdatenbefüllung (Initial Download) notwendig. Die Businessobjekt-Klassen, die heruntergeladen werden sollen, werden während der kundenspezifischen Anpassung des Systems bestimmt. Außerdem können Exemplare von Businessobjekten in Abhängigkeit von bestimmten Attribut-Werten gefiltert werden. Schließlich besteht die Möglichkeit, spezielle Exits (Customer Exits) zu benutzen.

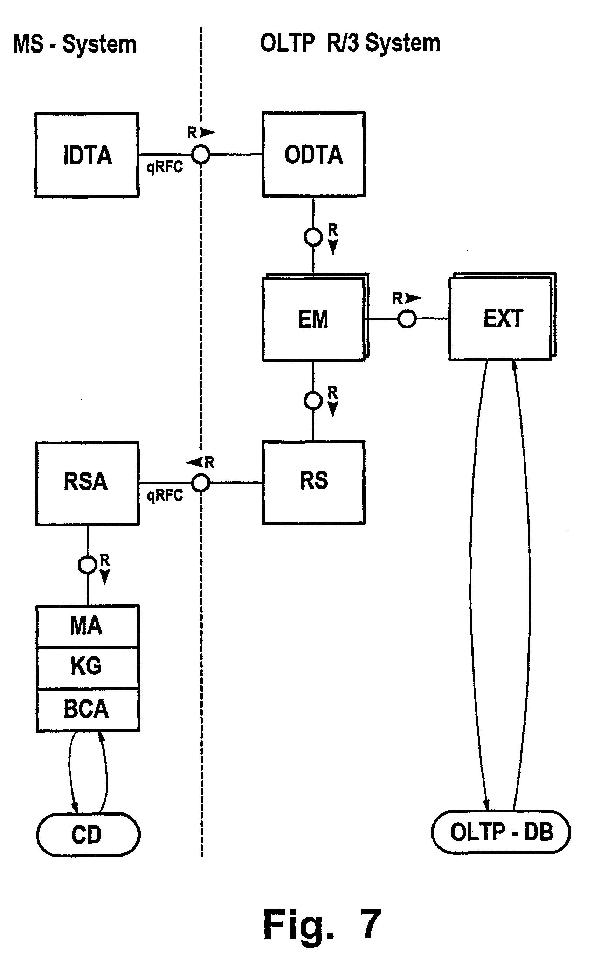

Figur 7 zeigt die Architektur der für die Erstdatenbefüllung verwendeten Komponenten. Ein Erstbefüllungstriggeragent (Initial Download Trigger Agent) IDTA wird vor Beginn der Produktionsphase von dem System-Administrator gestartet, um die Erstdatenbefüllung einzuleiten. Er ruft einen OLTP-Download Triggeragent (OLTP Download Trigger Agent) ODTA auf. Das Triggern wird mittels qRFC bewirkt. Dadurch wird sichergestellt, daß der Erstbefüllungsvorgang genau einmal durchgeführt wird. Der OLTP-Download Triggeragent ODTA ruft für ausgewählte Klassen von Businessobjekten Extraktor-Masters EM auf, die ihrerseits R/3 Extraktoren EXT aufrufen. Der Unterschied zwischen einem Extraktor-Master EM und einem Extraktor EXT besteht darin, daß der Extraktor-Master eine spezifisch auf die Kooperation mit dem MS-System abgestimmte Komponente ist, während die Extraktoren EXT auch in anderem Zusammenhang in dem OLTP-R/3-System verwendet werden.

Auf Basis der von den Extraktor-Masters übernommenen Filterkriterien wählen die Extraktoren EXT Objektdaten aus der OLTP-Datenbank OLTP-DB aus. Darüber hinaus liefert der Extraktor-Master auch Informationen über zu bearbeitende Tabellen, so daß nicht notwendigerweise vollständige Objekte extrahiert werden müssen. Der jeweilige Extraktor-Master übermittelt die ausgewählten Objekte an den Ergebnisübermittler RS. Wie erwähnt, kann mittels spezifischer Exits in dem Ergebnisübermittler eine zusätzliche Filterung durchgeführt werden.

Der Ergebnisübermittler RS übermittelt die Businessobjekt-Daten an den BAPI-Ergebnis-Save-Agenten RSA. Er ruft die Agenten für das Mapping MA, für die Schlüsselerzeugung KG und einen Massenspeicherungsagenten für die konsolidierte Datenbank (Bulk CDB Agent) BCA. Der Mapping-Agent wandelt die Strukturen des OLTP-R/3-Systems in Strukturen des MS-Systems um. Der Schlüsselgenerator erzeugt MS-Schlüssel für diejenigen Objekte, die nur einen OLTP-R/3 Schlüssel haben. Der Massenspeicheragent BCA schreibt die Daten der Businessobjekte in die konsolidierte Datenbank DB. Der Unterschied zwischen dem Massenspeicheragenten BCA und dem Datenbankservice CDS des MS-Systems besteht darin, daß der erstere mehrere Objekte gleichzeitig verarbeiten kann, während letzterer jeweils nur Daten eines einzelnen Businessobjekts verarbeiten kann.

Um eine gute Performance sicherzustellen, werden mehrere Klassen von Businessobjekten gleichzeitig heruntergeladen. Dies geschieht allerdings nur für voneinander unabhängige Klassen von Objekten. Soweit Objekte von anderen Objekten abhängen (beispielsweise "Aufträge" von "Kunden") werden sie in entsprechender Reihenfolge nacheinander heruntergeladen. Dabei werden die Objekte nicht auf der Ebene der Exemplare (Instances), sondern auf der Ebene der Klassen heruntergeladen, um in die gewünschte Reihenfolge gebracht zu werden.

Die Extraktoren extrahieren die Daten aus der OLTP-R/3 Datenbank. Wie erwähnt, werden sie auch für andere Applikationsbereiche (beispielsweise eine externe Anwendung BW) verwendet.

Die Verwendung der Extraktoren umfaßt zwei Schritte. In dem ersten Schritt werden Filterkriterien an einen Extraktor übergeben. Dieser bestimmt die Schlüssel aller Businessobjekte, die den Filterkriterien entsprechen. In einem zweiten Schritt wird der Extraktor-Master EM mit der Schlüsselliste aufgerufen, um die eigentliche Information zu lesen. Er holt mittels der Extraktoren die in dem Aufruf spezifizierten Daten von den Tabellen in der für die weitere Bearbeitung als BDoc erforderlichen Reihenfolge.

Eine Blockgröße bestimmt die Anzahl der Businessobjekte, die in einem Durchlauf bearbeitet werden. Der Extraktor kann seriell arbeiten, also einen Durchlauf nach dem anderen abarbeiten. Auch eine parallele Betriebsweise ist objektweise möglich.

Die Strukturen des OLTP-R/3-Systems werden durch Mapping in Strukturen des MS-Systems überführt. Das Mapping wird feldweise durchgeführt. Dabei können mehrere Felder zu einem Feld verkettet oder ein Feld in mehrere Teile unterteilt werden. Die Feldtypen werden konvertiert. Darüber hinaus wird abhängige Information aus den Quellfeldern erzeugt.

Der Schlüsselgenerator KG dient dazu, zu den OLTP-R/3-Schlüsseln jeweils CRM-MS-Schlüssel zu finden. Dabei wird jeweils ein Schlüsselgenerator spezifisch für einen Typ von BDocs unter Benutzung von Repository-Information generiert. Um den Schlüsselgenerator-Agenten aktuell zu halten, ist ein Generator zur Erzeugung von Schlüsselgeneratoren bei dem Generatoragenten des Repository als Abonnent registriert. Er wird aufgerufen, wenn sich die entsprechende Information des Repository ändert.

Der Schlüsselgenerator empfängt ein BDoc und setzt für alle vorhandenen OLTP-R/3-Schlüssel CRM-MS-Schlüssel, hier in Form von GUIDs (globally unique identifiers), ein. Die erforderlichen MS-Schlüssel werden an verschiedenen Stellen gesucht, nämlich zunächst in einer lokalen Tabelle des Schlüsselgenerators, dann über eine Schlüssel-Mapping-Tabelle und schließlich in der konsolidierten Datenbank CD. Wenn kein MS-Schlüssel gefunden wird, wird ein neuer erzeugt und in die verschiedenen Mapping-Tabellen eingefügt.

Die zusätzliche Schlüssel-Mapping-Tabelle ist notwendig, um in den Fällen, in denen die Daten noch nicht in der konsolidierten Datenbank CD abgespeichert sind, die doppelte Erzeugung eines Schlüssels zu verhindern. Die lokale Tabelle des Schlüsselgenerators ist optional und dient lediglich dazu, als Cache die Performance zu verbessern.

Zur Synchronisation zwischen der OLTP-R/3 Datenbank OLTP-DB und der konsolidierten Datenbank CD des MS-Systems sind zwei Komponenten vorgesehen: "Request" und "Compare". die Request-Komponente ist sehr ähnlich wie die Komponente für die Erstdatenbefüllung. Sie ermöglicht es, gezielt bestimmte Businessobjekte aus der OLTP-R/3 Datenbank OLTP-DB in die konsolidierte Datenbank CD herunterzuladen und damit die Replikation der Daten der tragbaren Rechner MC (unter Kontrolle der Flußsteuerung FC) durchzuführen. Die von einem Request spezifizierten Filterkriterien werden mit den allgemeinen Filterkriterien der Erstdatenbefüllung gemischt, so daß nur eine Untermenge der während der Erstdatenbefüllung verarbeiteten Daten ausgewählt werden kann. Die Request-Komponente kann sowohl interaktiv als auch im Batch-Modus gestartet werden.

Die Compare-Komponente lädt Business-Daten aus dem OLTP-R/3-System herunter. Die Unterschiede, die aus dem Vergleichsvorgang resultieren, beschreiben die Änderungen, die in der konsolidierten Datenbank CD vorgenommen werder müssen, damit ihr Inhalt mit dem Inhalt der OLTP-R/3 Datenbank OLTP-DB übereinstimmt. Dabei wird die Änderungsinformation ("Insert", "Update", "Delete") in BDoc-Strukturen gespeichert. Nach dem eigentlichen Vergleichsvorgang werden die Änderungen auf die konsolidierte Datenbank DB angewandt, um sie konsistent mit der OLTP-DB zu machen. Aus der Änderungsinformation werden BDocs erzeugt und zur Replikation der lokalen Datenbanken LD der mobilen Klienten MC (kontrolliert durch die Flußsteuerung) verwendet.

Nachfolgend werden einige für die Erfindung wesentliche Funktionen und bevorzugte Ausführungsformen ergänzend erläutert.

### 1. Systemübergreifende Bereitstellung von Primärschlüsseln

Wie oben dargelegt, ist es für die semantische Integration offline-verteilter Datenbanksysteme wesentlich, daß systemübergreifend ein Primärschlüssel zur Verfügung steht, der eine eindeutige Identifikation der Datenobjekte über die Grenzen der miteinander verschmolzenen Datenbanksysteme hinaus ermöglicht.

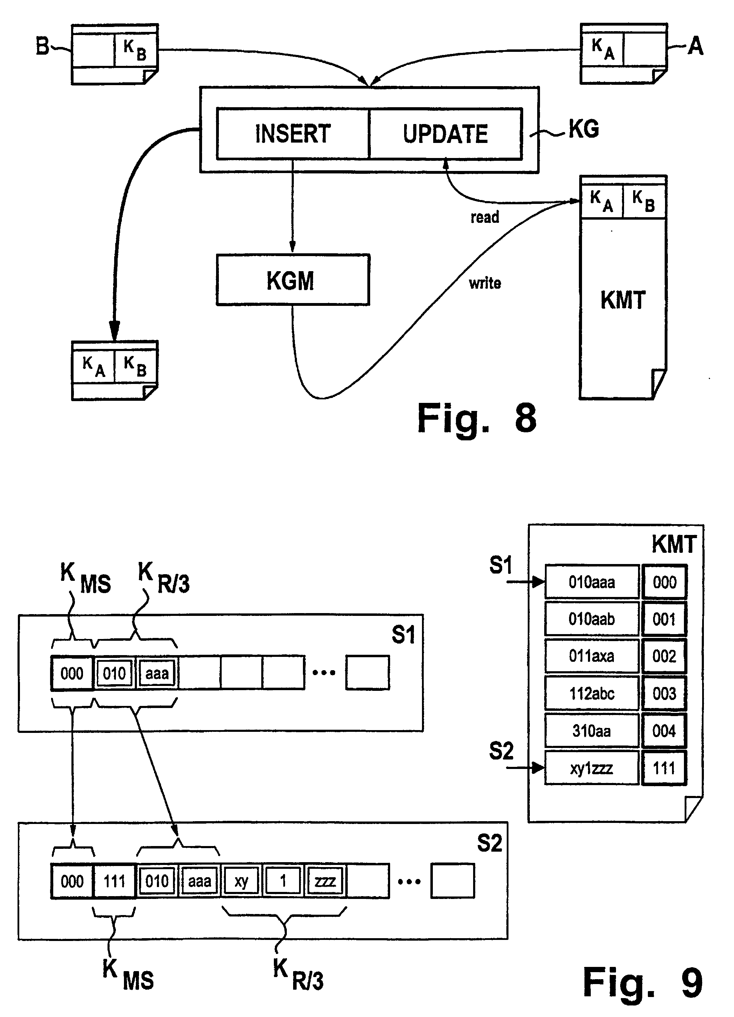

Die Grundprinzipien einer hierzu geeigneten Verfahrensweise sind (ergänzend zu den oben bereits gegebenen Erläuterungen) in Figur 8 dargestellt. Der Schlüsselgenerator KG erhält die in einem der hier allgemein mit A bzw. B bezeichneten Datenbanksysteme (Ursprungsystem) erfaßten Daten. Dazu gehört der jeweilige systemspezifische Primärschlüssel K_{A} bzw. K_{B}. Für den jeweils anderen Primärschlüssel (des Zielsystems) ist in dem Datensatz ein leeres Feld vorgesehen. Der Schlüsselgenerator liest den Inhalt einer Schlüssel-Mapping-Tabelle (Key Mapping Table) KMT und vergleicht mit den Schlüsselfeldern des von einem der Systeme A oder B angelieferten Datensatzes. Falls der Primärschlüssel des Ursprungsystems (beispielsweise K_{A}) in der Schlüssel-Mapping-Tabelle KMT bereits vorhanden ist, betrifft der angelieferte Datensatz eine Änderung (Update) eines bereits existierenden Eintrages. In diesem Fall wird der zugehörige Primärschlüssel des Zielsystems (beispielsweise K_{B}) aus der Schlüssel-Mapping-Tabelle KMT gelesen und in das leere Feld des Datensatzes eingetragen.

Wird hingegen der angelieferte Primärschlüssel in der Schlüssel-Mapping-Tabelle KMT nicht gefunden, so handelt es sich um die Neuanlage (Insert) eines Datensatzes. In diesem Fall wird von einem Schlüsselerzeugungsmodul (Key Generate Module) KGM der fehlende Primärschlüssel (beispielsweise K_{B}) erzeugt und in die Schlüssel-Mapping-Tabelle KMT geschrieben. Außerdem wird er in das leere Datenfeld eingetragen. Danach ist der Datensatz auch in dem Zielsystem eindeutig identifizierbar und die Schlüssel des Ursprungsystems und des Zielsystems sind einander eindeutig zugeordnet.

Ein praktischer Weg zur Durchführung dieses Prinzips bei einem Datenbanksystem, dessen Datenobjekte - wie die oben beschriebenen BDocs - in der praktischen Implementierung eine komplizierte Struktur hierarchisch gegliederter Datensegmente enthalten, wird nachfolgend erläutert.

In Figur 9 ist eine sehr einfache Struktur bestehend aus zwei Segmenten S1 und S2 dargestellt. Das Segment S1 ist dem Segment S2 hierarchisch um eine Stufe übergeordnet und wird deshalb als Vatersegment zu dem Kindsegment S2 bezeichnet. Das Vatersegment ist im dargestellten Fall das Root-Segment des BDoc.

Das Vatersegment S1 enthält einen Primärschlüssel K_{MS} des MS-Systems und einen Primärschlüssel K_{R/3} des OLTP-R/3-Systems. Jeder der Schlüssel ist in einem oder mehreren Feldern des Segments abgespeichert.

Auch das Kindsegment enthält einen (in einem Feld abgespeicherten) Primärschlüssel K_{MS} des MS-Systems und einen (in drei Felder abgespeicherten) Schlüssel K_{R/3} des OLTP-R/3-Systems. Außerdem sind in den Feldern des Kindsegmentes auch die Schlüssel des übergeordneten Vatersegmentes enthalten, wie durch die Pfeile zwischen beiden Segmenten verdeutlicht wird. Diese Felder haben jedoch keine Schlüsselfunktion, sondern dienen als sogenannte Foreign-Keys zur Information über die Segmentstruktur. Sie zeigen also an, daß S2 ein Kind des Segmentes S1 ist.

In Figur 9 rechts ist eine zugehörige Schlüssel-Mapping-Tabelle dargestellt, wobei in den mit den Pfeilen bezeichneten Zeilen die Schlüssel der Segmente S1 und S2 verzeichnet sind.

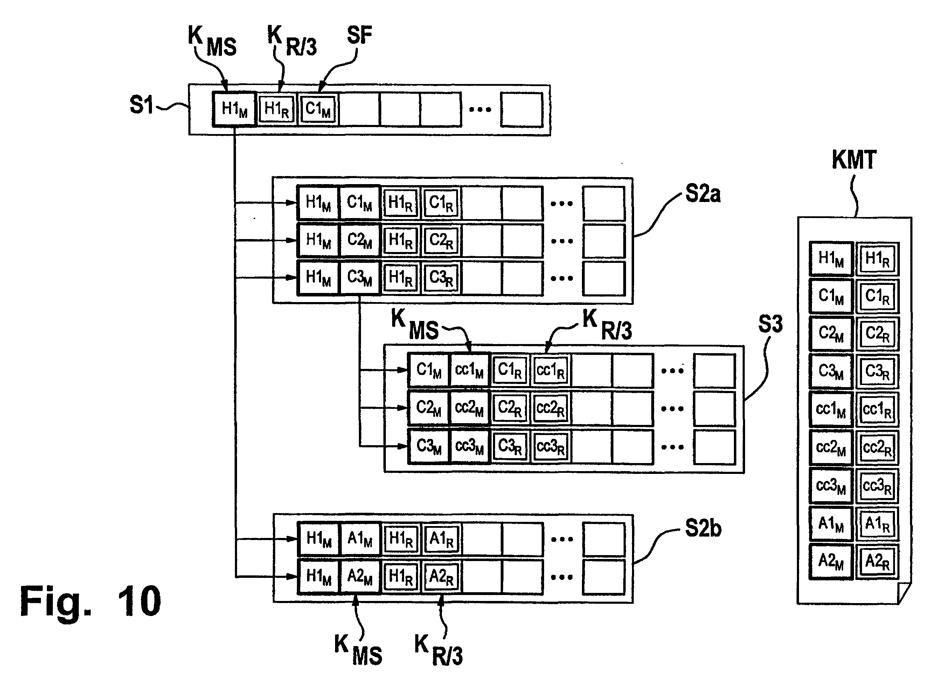

Figur 10 zeigt eine etwas komplexere Feldstruktur mit einem Vatersegment S1 (Root-Segment des BDoc), zwei hierarchisch untergeordneten Segmenten S2a und S2b der Kindgeneration und einem Segment S3 der Enkelgeneration, das ein Kind des Segments S2a ist. Beispielsweise könnte das Segment S1 für ein BDoc des Typs "Kunde" Name und Adresse des Kunden, das Segment S2a die Ansprechpartner bei dem Kunden, das Feld S3 Kontaktinformationen der Ansprechpartner (Telefonnummern, Dienstzeit etc.) und das Feld S2b Informationen über bei dem Kunden installierte Maschinen enthalten.

Auch in diesem Fall enthält jedes Segment (im dargestellten Fall der Übersichtlichkeit halber nur jeweils in einem Feld) die Schlüssel K_{MS} und K_{R/3} beider Datenbanksysteme, wobei die abhängigen Systeme jeweils die Schlüssel der Vatergeneration als Foreign-Keys enthalten. Die auf der rechten Seite der Figur 10 dargestellte Schlüssel-Mapping-Tabelle zeigt wiederum die Zuordnung der Schlüssel beider Systeme.

In der Praxis können Datenobjekte großer Datenbanksysteme sehr komplizierte Strukturen mit zahlreichen ineinander verschachtelten Hierarchieebenen haben, wobei die Segmente oft sehr große Zahlen von Daten-Records enthalten. Hinzu kommt, daß häufig spezielle Strukturelemente erforderlich sind, um besonderen Anforderungen Rechnung zu tragen. Beispielsweise besteht häufig das Bedürfnis, auf Daten einzelner Daten-Records rasch zugreifen zu können, obwohl sie sich in unteren Hierarchieebenen befinden. In diesen Fällen ist es zweckmäßig, den benötigten Schlüssel eines hierarchisch tieferen Segments in einem speziellen Feld eines höheren Segments abzuspeichern. Beispielsweise ist in Figur 10 dargestellt, daß der Schlüssel mit dem Code C1_{M} des ersten Daten-Records des Segmentes S2a in dem Spezialfeld SF des Segmentes S1 eingetragen ist, beispielsweise um einen direkten Zugriff auf den wichtigsten Ansprechpartner des in S1 codierten Kunden zu ermöglichen. Durch solche strukturellen Besonderheiten wird die Durchführung des oben geschilderten Verfahrens in der Praxis sehr schwierig.

Derartige Probleme können mit dem nachfolgend dargestellten Algorithmus gelöst werden. Er besteht aus zwei Programmteilen, die mit PASS-I und PASS-II bezeichnet sind.

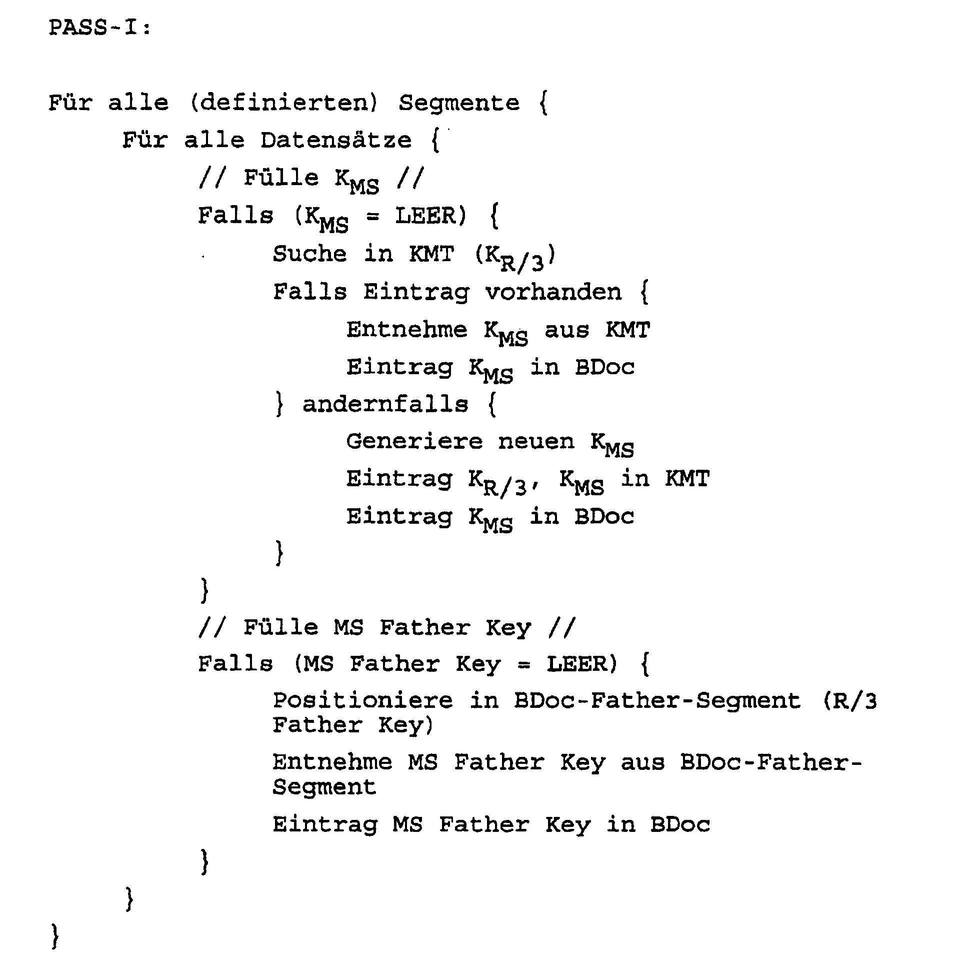

In PASS-I wird für alle definierten Segmente (d.h. für alle Segmente, für die eine Schlüsselgenerierung benötigt wird) und für alle Datensätze der mit dem Kommentar "Fülle K_{MS}" überschriebene Teilalgorithmus durchgeführt. In diesem Teilalgorithmus wird zunächst abgefragt, ob das Feld des Primärschlüssels leer ist. Falls dies zutrifft, wird in der Schlüssel-Mapping-Tabelle unter dem vorhandenen Schlüssel K_{R/3} gesucht, ob ein Eintrag vorhanden ist. Gegebenenfalls wird der zugehörige MS-Primärschlüssel aus der Schlüssel-Mapping-Tabelle entnommen und in das BDoc eingetragen.

Falls kein Eintrag des gesuchten K_{MS} vorhanden ist, wird ein GUID als neuer MS-Primärschlüssel erzeugt und sowohl der K_{R/3} als auch der K_{MS} wird in die Schlüssel-Mapping-Tabelle eingetragen. Außerdem erfolgt ein Eintrag des K_{MS} in dem BDoc.

Weiter wird der mit dem Kommentar "Fülle MS-Father-Key" überschriebene Teilalgorithmus durchgeführt. Falls das Feld für den MS-Vater-Schlüssel leer ist, wird die Leseposition in das Vatersegment innerhalb des BDoc gebracht und zwar in den Daten-Record, der den entsprechenden K_{R/3} enthält. Dann wird der entsprechende K_{MS} aus dem Vatersegment entnommen und in das Foreign-Key-Feld des Kindsegmentes eingetragen.

Der PASS-I wird mehrfach durchgeführt, bis alle Segmente des BDoc in der durch die Hierarchie vorgegebenen Reihenfolge (beginnend mit der höchsten Hierarchieebene) abgearbeitet sind.

Danach wird PASS-II gestartet. Er wird über eine in dem Repository gespeicherte Tabelle, die als FETCH-Tabelle bezeichnet wird, gesteuert. Darin sind Auffüllaktionen beschrieben, die in dem PASS-I nicht möglich sind. Hierzu gehören das Auffüllen mit Werten aus hierarchisch niedrigeren Segmenten (wie in Figur 10 dargestellt) und das Auffüllen mit Schlüsseln aus einer Hierarchieebene, die höher ist als die Vaterebene (also beispielsweise zwei Ebenen höher, d.h. Großvater).

Um diese Funktionen erfüllen zu können, hat die FETCH-Tabelle folgenden Aufbau:
· DestTbl: Destination Table
· DestFld: Destination Field
· SrcTbl: Source Table
· SrcFld: Source Field
· Cond: K_{R/3} oder Bedingung nach dem Muster x = y

Ein Eintrag in der FETCH-Tabelle erzeugt eine Auffüllaktion aus dem Quellfeld der Quelltabelle in das als Zieltabelle bezeichnete Segment eines BDocs.

Algorithmusdarstellung des PASS-II:

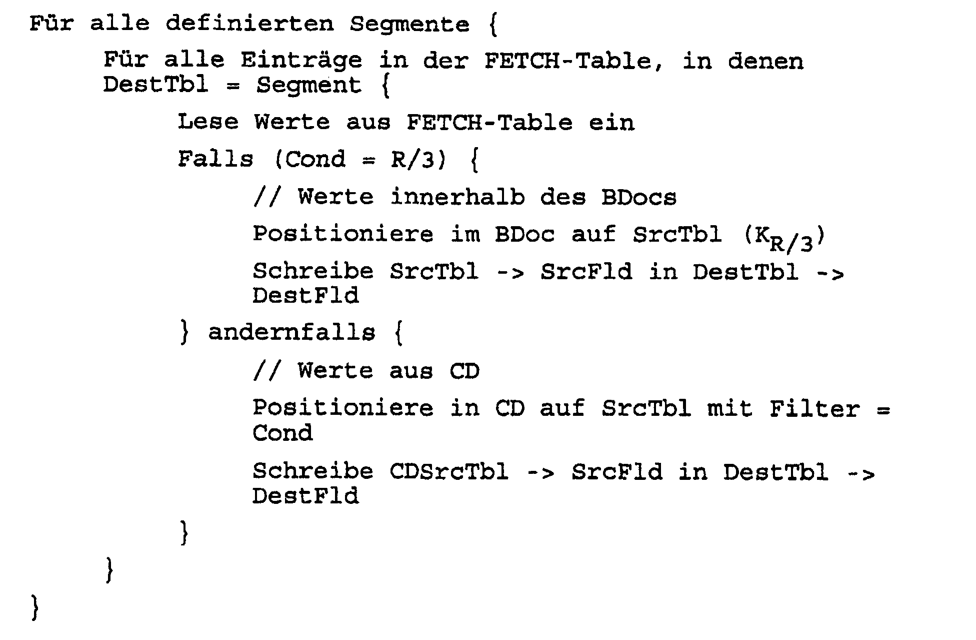

Für alle Segmente des bearbeiteten BDoc und für alle Einträge in der FETCH-Tabelle, für die das Segment als DestTbl eingetragen ist, wird der Wert aus der FETCH-Tabelle gelesen. Danach erfolgt eine Fallunterscheidung.

Für den Fall, daß Cond = R/3 gesetzt ist, handelt es sich um eine Übertragung von Schlüsselwerten innerhalb des BDocs, wobei der Inhalt des Quellfeldes in dem Quellsegment übertragen wird in das Zielfeld innerhalb des Zielsegmentes. Falls die Bedingung Cond einen anderen Wert hat, werden Werte aus dem BDoc selbst oder aus der konsolidierten Datenbank CD übernommen, wobei im letzteren Fall auf eine Quelltabelle innerhalb der Datenbank CD zugriffen und deren Inhalt in das Zielfeld des Zielsegmentes übertragen wird.

### 2. Data-Merge

Ein weiteres grundlegendes Problem bei der Verschmelzung unterschiedlicher Datenbanksysteme besteht darin, daß die zu einem bestimmten Typ von Datenobjekten in beiden Systemen vorhandenen Daten unterschiedlich sind. Beispielsweise können zu dem Datenobjekt "Kunde" in einem CRM-System Informationen über einzelne Kundenkontakte oder vorbereitende Verkaufsgespräche ("Opportunities") enthalten sein, die von einem ERP-System nicht benötigt werden. Umgekehrt enthält das Datenobjekt "Kunde" in einem ERP-System Informationen, wie beispielsweise das vollständige Kundenkonto seit Beginn der Geschäftsbeziehungen, die von dem CRM-System nicht benötigt werden und für die demzufolge in den dort bearbeiteten Datenobjekten keine Segmente vorhanden sind.

Hinsichtlich der Primärschlüssel ist die vorstehend erläuterte Logik vorteilhaft, bei der in einem der Systeme, nämlich dem Front-office-System MS beide Schlüssel K_{MS} und K_{R/3} der miteinander verschmolzenen Systeme vorgehalten werden, während in dem Back-office-System nur dessen Schlüssel K_{R/3} vorgehalten wird.

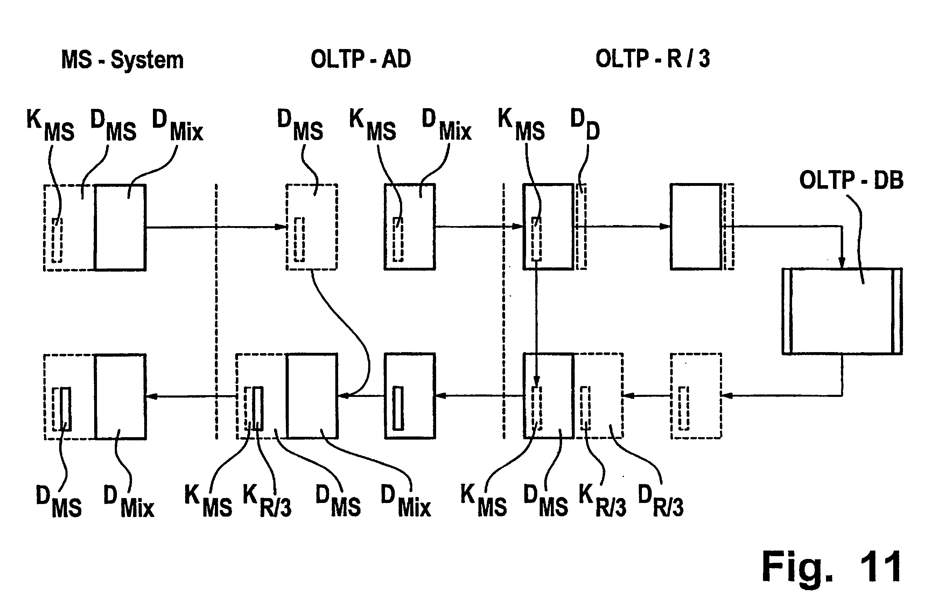

Um in einer derartigen Konstellation einen möglichst vollständigen Austausch von Daten zu ermöglichen, wird bevorzugt ein "Data-Merge-Verfahren" eingesetzt, das unter Verwendung folgender Konvention anhand der Figuren 5 und 11 beschriebenen wird:
- D_{MS}:: Daten, die nur in dem MS-System existieren
- D_{R/3}:: Daten, die nur in dem OLTP-R/3-System existieren
- D_{Mix}:: Daten, die in beiden System existieren

Wenn Daten, wie in Figur 11 dargestellt, aus dem MS-System als systemspezifisches Datenobjekt (BDoc) zur Übermittlung an das OLTP-R/3-System bereitgestellt werden, enthalten sie D_{MS}, D_{Mix} und K_{MS} als Schlüssel. In dem OLTP-Adapter OLTP-AD werden die Daten D_{MS} von dem BAPI-Caller BC herausgeteilt und geparkt. Danach transportiert der OLTP-Adapter die restlichen Informationen D_{Mix} und K_{MS} in das OLTP-R/3-System. Der Schlüssel des Ursprungsystems K_{MS} wird in dem Zielsystem OLTP-R/3 abgetrennt und in dem Speicherbereich Ergänzungsdaten AMD geparkt.

Anschließend werden die D_{MIX}-Daten mit Ergänzungsdaten D_{D} ergänzt, die notwendig sind, um das entstandene Datenobjekt in dem Zielsystem (OLTP-R/3) zu bearbeiten. Diese Ergänzungsdaten sind in der Regel Voreinstellungswerte (Defaultwerte) für die entsprechenden Datenfelder.

Danach wird die normale Bearbeitung in dem OLTP-R/3-System durchgeführt. Die Daten werden asynchron mit der in dem Zielsystem gebräuchlichen Verbuchungsroutine geprüft und in der Datenbank OLTP-DB abgespeichert.

In Verbindung mit der Verbuchung wird ein Event ausgelöst, das von dem Eventdistributor ED unter anderem an den Ergebnisübermittler RS übermittelt wird, der daraufhin die Daten aus der Verbuchung übernimmt. Das erhaltene Datenpaket besteht aus D_{R/3}, D_{Mix} und K_{R/3}. Der Ergebnisübermittler RS fügt den geparkten MS-Schlüssel K_{MS} ein und entfernt die für das MS-System nicht relevanten Daten D_{R/3}. Danach erfolgt die Übergabe in das MS-System als Datenpaket D_{Mix}, K_{MS} und K_{R/3}. Innerhalb des MS-Systems werden von dem Ergebnis-Save-Agenten RSA die geparkten Daten D_{MS} wieder angefügt, so daß das vollständige BDoc mit den Daten D_{MS}, D_{Mix}, K_{MS} und K_{R/3} zur Weiterverarbeitung (insbesondere zur Konsolidierung in der Datenbank CD und zur anschließenden Replikation an die mobilen Klienten MC) zur Verfügung steht.

Dieses Data-Merge-Verfahren findet bei jedem Update von Daten aus dem MS-System in das OLTP-R/3-System statt. Bei Datenänderungen in dem OLTP-R/3-System (Deltadownload) läuft ein Teil dieses Verfahrens beginnend mit der Verbuchungsroutine ab, wobei selbstverständlich kein MS-Schlüssel K_{MS} hinzugefügt werden kann. Er wird in diesem Fall von dem Schlüsselgenerator KG in der oben erläuterten Weise generiert.

### 3. Download

Ein wesentliches Ziel der Verschmelzung von Datenbanksystemen besteht darin, gemeinsam benutzte Daten in den Systemen nicht getrennt pflegen zu müssen, sondern die in den miteinander verschmolzenen Datenbanksystemen vorliegenden Daten gemeinsam nutzbar zu machen. Beispielsweise soll ein CRM-Front-office-System auf Daten über Kundenund Produktinformationen zugreifen können, die in dem ERP-Back-office-System des Unternehmens gespeichert sind.

### a) Erstdatenbefüllung

Damit stellt sich zunächst die Aufgabe, diejenigen Daten eines bereits bestehenden ersten Datenbanksystems (Ursprungsystem A, hier OLTP-R/3-System), die auch von einem neu implementierten weiteren Datenbanksystem (Zielsystem B, hier MS-System) benötigt werden, im Rahmen einer Erstdatenbefüllung (Initial Download) von dem System A an das System B zu übertragen. In diesem Zusammenhang werden im Rahmen der vorliegenden Erfindung folgende Problemlösungen vorgeschlagen.

Die Datenmengen in dem vorhandenen Back-office-System (nachfolgend weiterhin ohne Beschränkung der Allgemeinheit als OLTP-R/3-System bezeichnet) sind in der Regel sehr groß. Deswegen müssen Mittel bereitgestellt werden, die mit anderen Systemen auszutauschenden Daten näher zu spezifizieren. Im Rahmen der Erfindung erfolgt dies vorzugsweise durch Filterung.

Für die Filterung werden die im Zusammenhang mit Figur 7 beschriebenen Extraktoren verwendet, die von dem OLTP-R/3-System zur Verfügung gestellt werden. Eine Besonderheit besteht dabei darin, daß in Form der Extraktor-Masters eine standardisierte Schnittstelle zu dem MS-System verwendet wird, über die alle Anfragen des MS-Systems laufen. Die Daten werden also dadurch gefiltert, daß das Ziel-Datenbanksystems MS die Anforderungen für von ihm benötigte Daten über eine standardisierte Schnittstelle an Extraktoren überträgt, die in dem Ursprungssystem OLTP-R/3 implementiert sind.

Ein weiteres Problem besteht darin, die Erstdatenbefüllung in einer vertretbaren Zeit zu ermöglichen. Dies ist mit den üblicherweise in Back-office-Systemen vorhandenen Mitteln nicht möglich, weil diese für die rasche Übertragung sehr großer Datenmengen nicht eingerichtet sind. Dieses Problem wird im Rahmen der Erfindung vorzugsweise dadurch gelöst, daß die oben näher erläuterten als massenorientierte BDocs bezeichneten speziellen Datencontainer zur Verfügung gestellt werden.

Schließlich besteht ein Problem der Erstdatenbefüllung darin, sicherzustellen, daß die an das Ziel-Datenbanksystem übertragenen Daten einem ganz bestimmten Zustand des Ursprungsdatenbanksystems zu einem definierten Zeitpunkt (Snapshot) entsprechen. Herkömmlich wird dieses Problem gelöst, indem man das Ursprungs-Datenbanksystem während der Erstdatenbefüllung für Änderungen sperrt oder - soweit Änderungen zugelassen sind - spezielle Instrumente der Ursprungs-Datenbank nutzt, die jedoch eine Datenbankunabhängige Operationalität der Erstdatenbefüllung ausschließen.

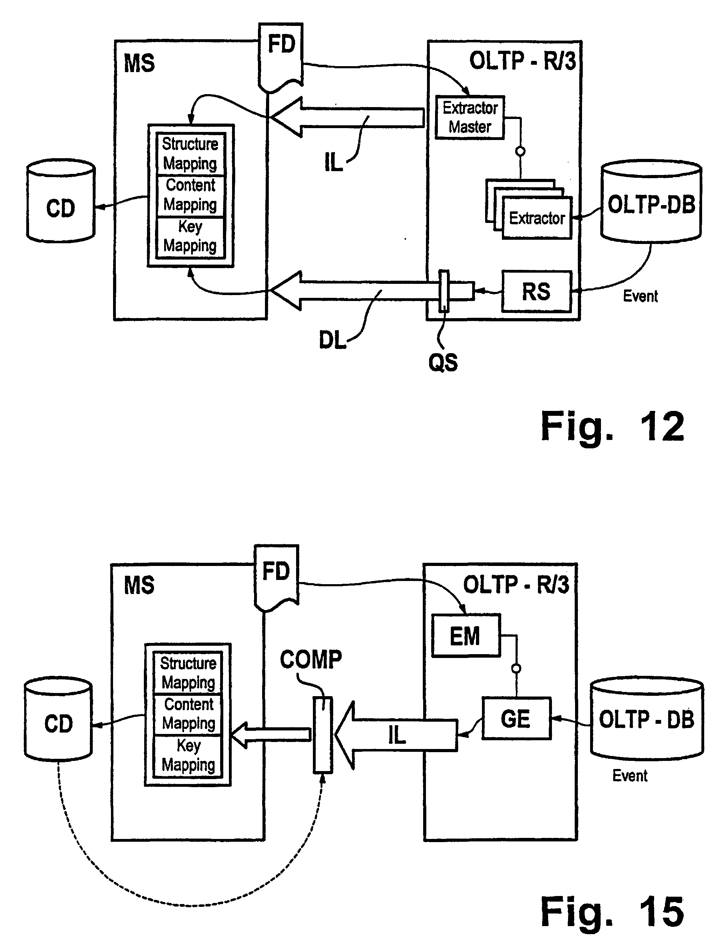

Zur Lösung dieses Teilproblems wird im Rahmen der Erfindung ein Verfahren vorgeschlagen, welches nachfolgend als Online-Synch-Verfahren bezeichnet und anhand von Figur 12 erläutert wird. Dabei arbeiten die in dem Ursprungssystem OLTP-R/3 implementierten Extraktoren, die - gesteuert durch in dem Zielsystem MS gespeicherte Filterdefinition FD - über die Extraktor-Master-Schnittstelle EM angesprochen werden, normal in Blöcken lesend und abgebend, wobei sie die dynamische Datenänderung der Ursprungsdatenbank ignorieren. Die Masse der von dem Zielsystem benötigten Daten wird damit auf dem durch den Pfeil IL (Initial Load) bezeichneten Weg übertragen.

Parallel läuft jedoch auch das bereits erläuterte Delta-Handling mittels des Ergebnisübermittlers RS ab. Dadurch werden Änderungen, die in dem Ursprungsystem während der Erstdatenbefüllung anfallen, in eine queue eingestellt. Im Gegensatz zum normalen Deltadownload-Betrieb wird diese queue jedoch nicht freigegeben, sondern während der Dauer der Erstdatenbefüllung gesperrt (Queue-Stop QS). Nach Beendigung der Erstdatenbefüllung wird die Änderungsqueue freigegeben und die während der Erstdatenbefüllung durchgeführten Änderungen werden über den durch den Pfeil DL (Deltaload) symbolisierten Deltadownload-Kanal an das Zielsystem MS übertragen. Somit entsteht ein konsistenter "Snapshot", bezogen auf den Zeitpunkt der Beendigung der Erstdatenbefüllung.

### b) Deltadownload

Auch hinsichtlich der Funktion Deltadownload wird auf die weiter oben (vor allem anhand von Figur 5) und zu dem Data-Merge-Verfahren gegebenen Erläuterungen Bezug genommen. Es geht dabei darum, nach der Erstdatenbefüllung im laufenden Betrieb alle an ein Ursprungs-Datenbanksystem A angeschlossenen Systeme jeweils mit Änderungen zu versorgen.

Die Funktion wird in zwei Teilschritten bereitgestellt:
a) Mitteilung des Ursprungs-Datenbanksystems über durchgeführte Änderungen und
b) Aufgreifen der Änderung und Aufbereitung sowie anschließende Übergabe an das Ziel-Datenbanksystem zur Weiterverarbeitung.

Üblicherweise werden zur Mitteilung über durchgeführte Änderungen Änderungspointer verwendet. Dies hat jedoch erhebliche Nachteile. Zum einen ist es erforderlich, in der Applikation des Ursprungs-Datenbanksystems für jede mögliche Änderung einen Änderungspointer vorzusehen. Dies ist meist nicht für alle Datenobjekte möglich, zumindest aber sehr aufwendig und eine kritische Fehlerursache. Zum zweiten findet die Übermittlung von Änderungen nur in vorgegebenen Zeitintervallen statt.

Zur Lösung dieses Teilproblems wird im Rahmen der Erfindung vorzugsweise die Event-Technik benutzt. In die Routine zur Einarbeitung einer Änderung in die Datenbank OLTP-DB des Ursprung-Datenbanksystems ist die Erzeugung eines Events integriert. Über den Event-Distributor ED werden Funktionsbausteine, die eine Subskription für das Event unterhalten, bei Eintreten des Events aufgerufen. Zu diesen Funktionsbausteinen gehört ein entsprechender Baustein des Ziel-Datenbanksystems (in Figur 5 eine Komponente des Ergebnis-Save-Agenten RSA). Somit bekommt der OLTP-R/3 Adapter des MS-Systems (allgemein gesprochen also ein Baustein des Zielsystems) zeitnah eine Information über jede für das Zielsystem relevante Änderung in dem Ursprungs-Datenbanksystem.

Die anschließende Übertragung der Änderung von dem Ursprungs-Datenbanksystem an das Ziel-Datenbanksystem erfolgt anhand der bereits diskutierten in dem Ziel-Datenbanksystem gespeicherten Filterkriterien FD (Figur 12). Danach werden die Daten mit Hilfe des oben beschriebenen Data-Merge-Verfahrens aufbereitet und es wird mit der ebenfalls weiter oben beschriebenen Verfahrensweise ein systemübergreifender Primärschlüssel generiert.

Eine weitere Besonderheit der Datenübermittlung besteht darin, daß (insbesondere bei dem Deltadownload) die nachfolgend beschriebene Netto-Feld-Ermittlung verwendet wird.

Um das gegenseitige Überschreiben von Änderungen, die durch viele unabhängig auf die gleichen Datenbestände zugreifende Benutzer durchgeführt werden, zu minimieren, ist es vorteilhaft, nur die geänderten Felder der jeweiligen Datensätze zu übertragen. Dies wird als Netto-Feld-Übertragung bezeichnet. ERP-Back-office-Systeme wie insbesondere das OLTP-R/3-System können in der Regel jedoch nur "Brutto-Feld" kommunizieren, d.h. sie übertragen nur gesamte Datensätze mit sämtlichen Feldinhalten auf einmal. Die Daten treten deswegen Brutto-Feld über den Datenkanal DL (Figur 12) in das Zielsystem MS über, wenn ein solcher Übertritt durch den Ergebnisübermittler RS ausgelöst wurde. Dieser Nachteil wird gemäß einer bevorzugten Ausführungsform der Erfindung dadurch ausgeglichen, daß in dem Zielsystem, nämlich dem Datenbankservice CDS der konsolidierten Datenbank CD die wirklichen Änderungen auf Feldebene durch Vergleich mit dem Inhalt der konsolidierten Datenbank CD ermittelt werden und nur die tatsächlichen Änderungen Netto-Feld in die Folgeverarbeitung eingehen.

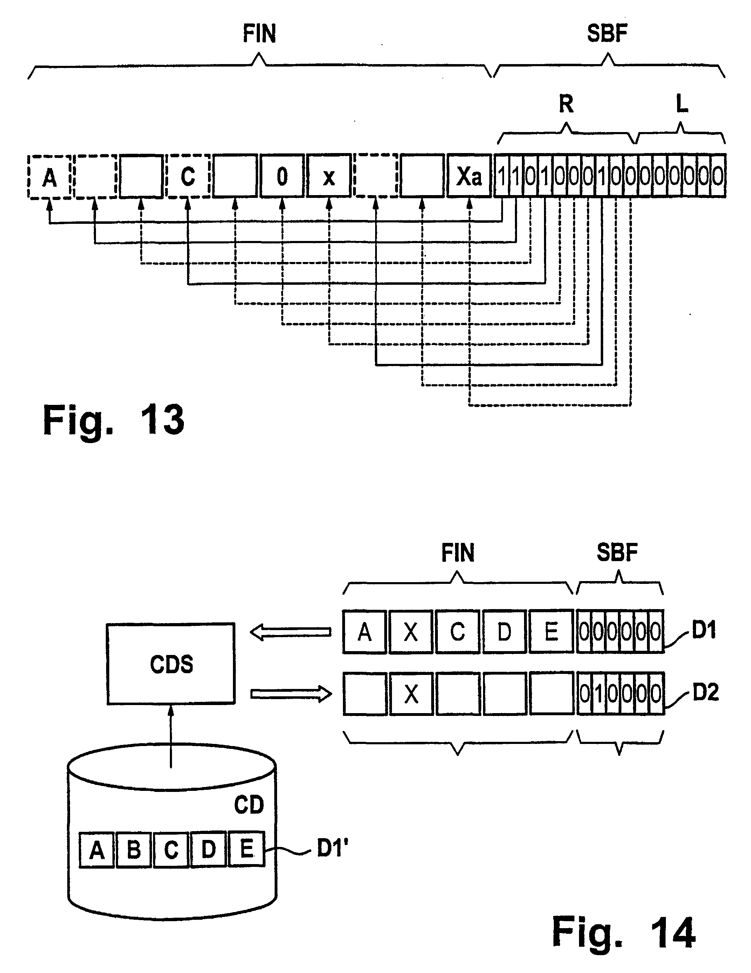

Wie dies im einzelnen geschieht, wird anhand der Figuren 13 und 14 erläutert.

Zur Unterstützung der Netto-Feld-Übertragung ist in alle Segmente der BDocs (d.h. der Datenobjekte des Ziel-Datenbanksystems) ein Feld eingefügt, das die geänderten Felder wiederspiegelt. Dieses Feld wird als Send-Bit-Feld SBF bezeichnet. Es kann beispielsweise vom Typ RAW(32) sein und beinhaltet in der Binärdarstellung (zweckmäßigerweise als HEX abgelegt) an jeder Position eine "1", die mit einem Feld korrespondiert, welches eine Änderung erfahren hat. Diese Zuordnung der Send-Bit-Information SBF zu der Feldinformation FIN ist in Figur 13 graphisch dargestellt. Auch Löschungen werden als Änderungen angezeigt. In dem dargestellten Fall wurde beispielsweise der Feldinhalt der Felder 1 und 4 geändert (in "A" und "C") und der Feldinhalt der Felder 2 und 8 gelöscht. Der Feldinhalt des zusätzliches Feldes SBF besteht aus einem relevanten Teil R, dessen Bit-Zahl der Zahl der Felder entspricht und einem nichtrelevanten Teil L, der ignoriert wird.

Für den Fall, daß Datensätze Brutto-Feld in das Ziel-Datenbanksystem übertreten, erfolgt ein Abgleich mit der Datenbank CD des Ziel-Datenbanksystems MS. Dieser Abgleich wird in dem Datenbankservice CDS der Datenbank CD durchgeführt und ist in Figur 14 graphisch dargestellt. Darin ist der Datensatz D1 ein Beispiel für einen Brutto-Feld übertragenen Datensatz mit einem geänderten Feldinhalt "X". Der Datenbankservice CDS vergleicht den Datensatz mit dem entsprechenden in der Datenbank CD abgelegten Datensatz D1' und stellt fest, daß nur das Feld mit dem Inhalt "X" geändert wurde. Entsprechend wird der Datensatz D2 generiert, der nur die geänderte Information enthält. Das entsprechende Send-Bit wurde auf "1" gesetzt. Die übrigen Feldinhalte wurden geleert.

### c) Synchronisation

Semantische Integration in dem einleitend erläuterten Sinn bedeutet mehr als den reinen Austausch von Daten zwischen Systemen. Nach Möglichkeit soll sich das Applikationsverhalten hinsichtlich der grundlegenden Logik der Verarbeitung der Nutzdaten ("Business Logik") annähern. Die Business Logik spiegelt sich in hohem Maße in den Steuerdaten wider, die in dem Repository des jeweiligen Datenbanksystems gespeichert sind und die Logik abbilden, wie beispielsweise Wertebereiche, Feld-, Satz- und Datenbankplausibilitäten. Deswegen sollten im Rahmen der semantischen Integration auch die Repository-Steuerinformationen systemübergreifend repliziert werden. Im Falle des OLTP-R/3-Systems sind dies die sogenannten Customizing-Tabellen (T-tables). Änderungen an den Customizing-Tabellen werden in dem OLTP-R/3-System jedoch weder durch Änderungs-Pointer noch als Events angezeigt. Demzufolge wird ein Replikat dieser Daten in einem Ziel-Datenbanksystem wie dem MS System schnell veralten, wenn kein geeigneter Aktualisierungsmechanismus zur Verfügung steht.

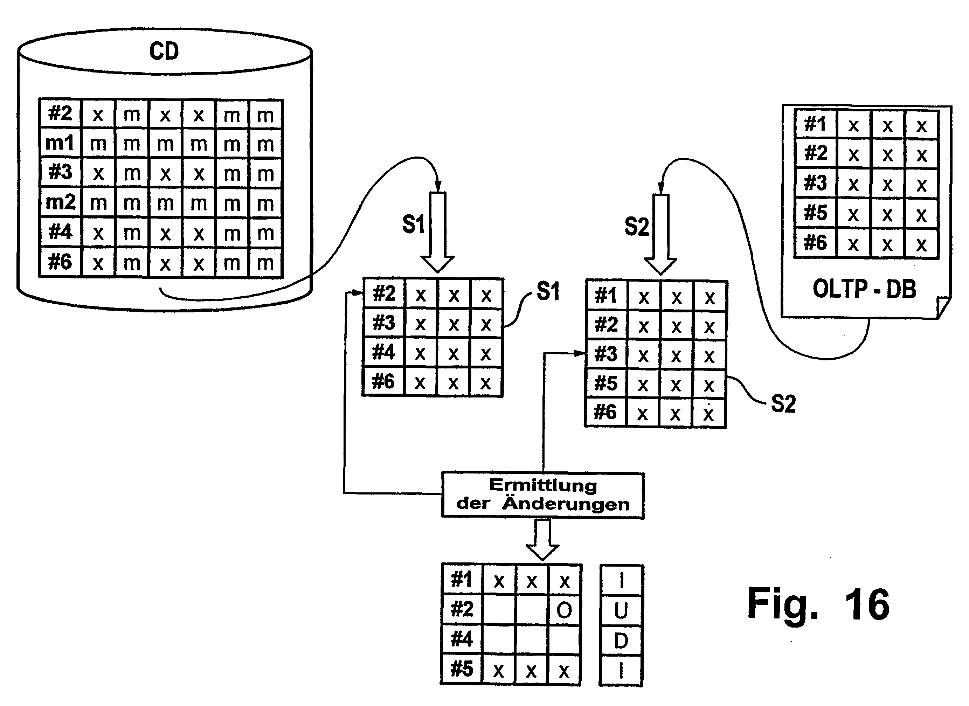

Um auch in derartigen Fällen eine laufende Synchronisation des Datenzustandes zwischen einem Ursprungssystem und einem Zielsystem zu ermöglichen, werden die bereits erwähnten Komponenten "Request" und "Compare" verwendet. Der damit realisierte Synchronisationsmechanismus wird anhand der Figuren 15 und 16 verdeutlicht.

Die Komponente Request arbeitet wie bereits erläutert analog wie die Erstdatenbefüllung. Um beliebige Businessobjekte aus dem OLTP-R/3-System in das MS-System herunterzuladen wird ein Modul verwendet, der als General-Extraktor GE bezeichnet und entsprechend der Filterdefinition FD über den Extraktormaster EM angesprochen wird.

Bevor die so heruntergeladenen Daten in die konsolidierte Datenbank CD eingearbeitet werden, wird der in Figur 15 mit COMP bezeichnete Compare-Modul aufgerufen, der die heruntergeladenen Daten mit den bereits in der Datenbank CD existierenden Daten vergleicht und nur tatsächlich geänderte Daten passieren läßt. Außerdem erzeugt er Löschaufträge für nicht mehr im Original vorhandene Daten.

Der hierzu verwendete Algorithmus läßt sich anhand von Figur 16 verdeutlichen. In einem Vorbereitungslauf werden zunächst die aus dem OLTP-R/3-System empfangenen Daten und die hierzu jeweils korrespondierende Tabelle aus der Datenbank CD in jeweils einem Speicherplatz S2 bzw. S1 bereitgestellt. Bei der Selektion der korrespondierenden Tabelle aus der Datenbank CD werden die Daten so gefiltert, daß alle Records, die nur in dem MS-System enthalten sind (in Figur 6 die Records m1 und m2), nicht in die Selektion fallen. Auch in den übrigen Records sind Felder mit MS-spezifischen Daten enthalten. Durch eine weitere Restriktion bei der Datenübertragung wird dafür gesorgt, daß in dem Speicherbereich S1 nur Daten bereitgestellt werden, die auch in dem OLTP-R/3-System verfügbar sind.

Der anschließende Vergleich der Inhalte der Speicherbereiche S1 und S2 erfolgt dadurch, daß eine der Tabellen als Referenz gewählt wird, wobei durch diese Tabelle von ihrem Beginn bis zum Ende gesteppt wird und in der anderen Tabelle die entsprechenden Einträge gesucht werden. Dabei ist es aus Performance-Gründen vorteilhaft, diejenige Speichertabelle als Referenz zu wählen, die die geringere Anzahl an Einträgen enthält (in Figur 16 die Tabelle in dem Speicherbereich S1). In Abhängigkeit von dem Ergebnis des Vergleichs werden entsprechende Aktionen eingeleitet wie:
- erzeuge Neueinträge:: "I"
- erzeuge Netto-Feldeinträge:: "U"
- erzeuge Löchauftrag:: "D"

Der Algorithmus läßt sich wie folgt darstellen:

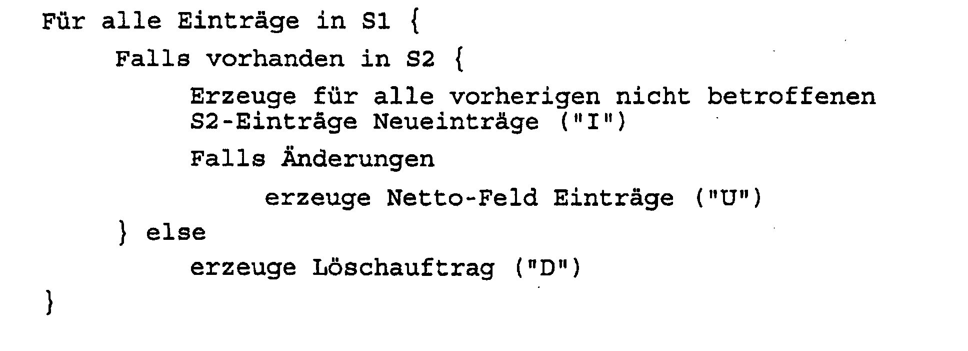

### 4. Upload

Wie dargelegt, ist es ein wesentliches Element der semantischen Integration von Datenbanksystemen, daß Datenaufnahmen und -änderungen nicht nur in einem, sondern in mehreren oder allen der miteinander verbundenen Datenbanksysteme durchgeführt werden können. Beispielsweise soll es also möglich sein, daß Außendienstmitarbeiter bei dem Kunden neue Daten (beispielsweise einen neuen Auftrag) in ihren tragbaren Rechner eingeben und diese Änderung des Datenbestandes in der Datenbank OLTP-DB persistent gemacht wird.

Änderungen auf der Ebene der mobilen Klienten werden durch die im Zusammenhang mit Figur 2 beschriebene Transaktionsschicht, über die die mobilen Klienten mit dem MS-System und ihrer eigenen lokalen Datenbank LD kommunizieren, registriert. Wenn der tragbare Rechner mit dem Middleware-Server MS verbunden wird, werden die geänderten Daten als BDocs übermittelt und auch an das Back-office-System OLTP-R/3 übertragen. Die hierfür verwendeten Komponenten wurden anhand von Figur 5 und das dabei ablaufende Data-Merge-Verfahren wurde anhand von Figur 11 erläutert.

Eine wesentliche Anforderung bei einem solchen Daten-Upload ist die Entwicklung einer geeigneten Konfliktauflösungsstrategie, um Konflikte zwischen den an verschiedenen Orten aufgenommenen oder geänderten Daten zu verhindern. Die Definition von sogenannten "Datenpflegehoheiten", die die Änderung von Daten jeweils nur an bestimmten Stellen des Verbundsystems gestattet, würde keine ausreichende Integration bieten. Auch das bei manchen Anwendungen verwendete Verfahren LOW (Last One Wins) ist für ein derartiges Verbundsystem, das die Daten eines ERP-Back-office-Systems einschließt, nicht geeignet.

Deshalb wird im Rahmen einer bevorzugten Ausführungsform eine neuartige Konfliktlösungsstrategie verwendet, die als LSC (Leading System Concept) bezeichnet wird. Das LSC-Verfahren definiert für jedes Datenobjekt ein führendes System (FS). Alle anderen Systeme des Verbundsystems sind geführte Systeme (GS). Jede Änderung eines GS muß erst durch das FS bestätigt werden. Ein wesentlicher Unterschied gegenüber üblichen Bestätigungsfunktionen besteht darin, daß es sich hier um eine Funktion handelt, die Applikationsgrenzen überschreitet und dazu dient, Konflikte zwischen Systemen, deren Stukturen nicht kompatibel sind, zu lösen.

Die Implementierung des LSC-Verfahrens erfordert spezielle Funktionen, die nachfolgend erläutert werden.

In dem hier beschriebenen Beispiel ist für alle Datenobjekte das MS-System das geführte System. Das geführte System muß in der Lage sein, folgende Anforderungen zu erfüllen:
- Der Benutzer muß bei der Darstellung der Daten jederzeit deren Bestätigungsstatus (akzeptiert, abgelehnt, offen) erkennen können.
- Der Benutzer muß bei Ablehnung der von ihm geänderten Daten wieder auf seine ursprünglichen Werte zugreifen können.
- Das Datenobjekt darf nicht gesperrt sein, bis eine Änderung bestätigt ist, d.h. es muß möglich sein, daß mehrere zu prüfende Änderungen an dem gleichen Datenobjekt aufeinander folgen, ohne daß das Ende der vorherigen Prüfung abgewartet werden muß.
- Die Datenkonsistenz im gesamten Systemverbund muß gewährleistet sein.

Die Erfüllung dieser Anforderungen wird vor allem durch zwei Funktionsmodule möglich, die als Pending Counter (PC) und als Inbox (IB) bezeichnet werden.

Der Pending Counter ist ein Char (4) Feld, das sich in jeder an dem Datenaustausch beteiligten Tabelle (also in jedem Segment der BDocs) befindet. Über dieses Feld ist der aktuelle Bestätigungszustand der Daten definiert. Es bildet ein Controll-Flag, das von dem Anwendungsprogramm ausgewertet wird, um den Bestätigungszustand der Daten-beispielsweise auf dem Bildschirm - zu visualisieren.

Der Pending Counter hat folgende Ausprägungen:
- "○":: OK
- P<n>:: Pending (= offen, noch nicht bestätigt) wobei <n> als Referenzzähler die Anzahl der Änderungungen hochzählt
- F<n>:: Datensatz ist im Fehlerzustand

Der Pending Counter wird bei jeder Änderung hochgezählt und bei Bestätigung durch das führende System wieder heruntergezählt, bis er wieder auf "0" steht. Im Falle der Ablehnung wird ebenfalls heruntergezählt, jedoch anstelle eines "P" eine "F" gesetzt.

Um die Datenkonsistenz im Gesamtsystem zu gewährleisten, ist es notwendig, daß bei nicht akzeptierten Änderungen der ursprüngliche Datenzustand in dem geführten System wiederhergestellt wird (Roll Back). Dies geschieht vorzugsweise dadurch, daß das führende System (im Beispiel das OLTP-R/3-System) zugleich mit der Ablehnung das in dem Datenobjekt - wie weiter oben erläutert - enthaltene "Bild des vorherigen Zustandes" (Before Image) BI an das geführte System zurückschickt. Damit kann ein Roll Back durch Einspielen des Originalzustandes erfolgen.

Ein Nachteil dieser Verfahrensweise besteht jedoch darin daß damit sämtliche Änderungen des Benutzers in dem jeweiligen Datenobjekt überschrieben werden. Wenn es sich beispielsweise um einen Auftrag mit über hundert Positionen handelt, der möglicherweise wegen einer vergleichsweise geringfügigen Inkonsistenz abgelehnt wurde, besteht das Bedürfnis, die Daten des fehlerhaften und deswegen nicht akzeptierten Datenobjektes dem Benutzer, von dem die Änderung ausgegangen war, wieder zur Verfügung zu stellen. Dies geschieht mittels der Inbox. Der Benutzer kann dann die Einträge komfortabel anpassen und erneut verfügbar machen.

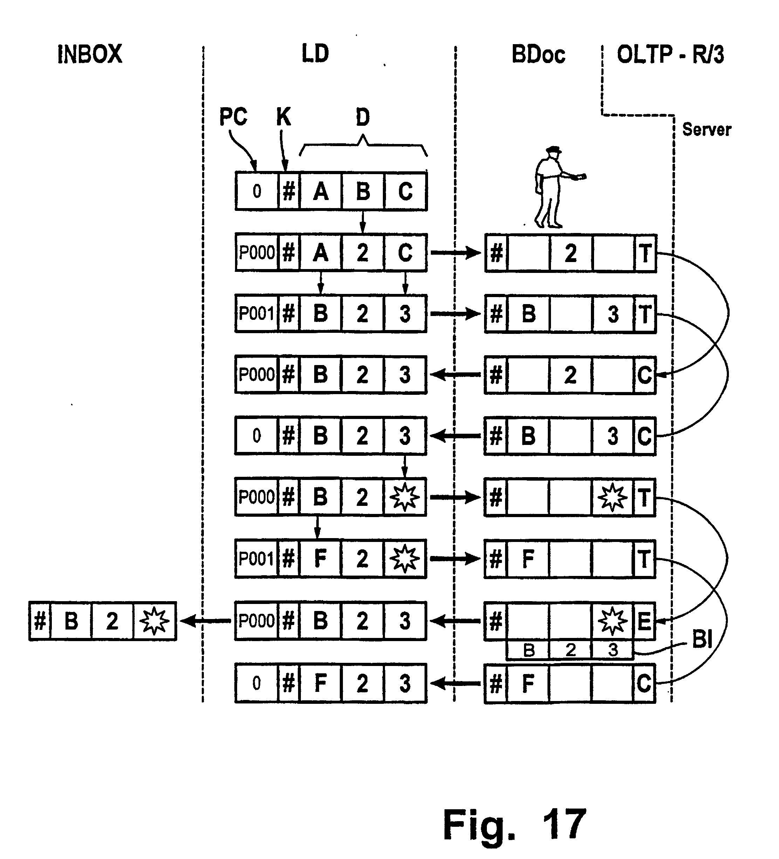

Die Funktion des Pending Counter und der Inbox ist in Figur 17 anhand eines Beispiels dargestellt. Dabei symbolisiert die mit LD überschriebene Spalte den Inhalt der lokalen Datenbank mit jeweils einem Feld, das den Status des Pending Counter PC anzeigt, dem Primärschlüsselfeld K und drei Datenfeldern D.

In einem ersten Schritt wird der Inhalt des mittleren Datenfeldes geändert. Das BDoc, das die Information an das OLTP-R/3-System überbringt, enthält nur die geänderte Information "2".

Im nächsten Schritt werden zwei Datenfelder geändert. Die geänderten Informationen "B" und "3" werden ebenfalls als BDoc übertragen. Im vierten Schritt trifft die Bestätigung der ersten Änderung und im fünften Schritt die Bestätigung der zweiten Änderung ein. Der Pending Counter PC zeigt jeweils den Bestätigungszustand an.

Im sechsten Schritt erfolgt eine für das führende System nicht akzeptable Änderung, die durch ein sternförmiges Symbol gekennzeichnet ist. Diese Änderung wird abgelehnt als Fehlernachricht "E", so daß im achten Schritt der Zustand vor dieser Änderung wiederhergestellt wird. Gleichzeitig wird in die Inbox der (abgelehnte) geänderte Zustand gestellt, so daß der Benutzer daran weiterarbeiten kann. Eine mittlerweile in dem siebten Schritt vorgenommene zulässige Änderung in dem ersten Feld wird in dem neunten Schritt bestätigt.

Die Erzeugung der Before-Images erfolgt unter der Kontrolle der Flußsteuerung des MS-Systems mittels eines Reject-Services. Dieser prüft anhand eines im Header des BDocs gesetzten Flags, ob das gesamte BDoc bestätigt oder abgelehnt wurde. Im Falle der Ablehnung extrahiert der Reject-Service die Gesamt-Daten des BDocs aus der konsolidierten Datenbank CD und stellt sie innerhalb des BDoc als Before-Images bereit. Wird das Gesamt-BDoc akzeptiert, so prüft der Reject-Service dessen Teilsegmente auf ihren Status. Im Falle der Ablehnung eines Teilsegmentes werden dessen Inhalte ebenfalls aus der konsolidierten Datenbank CD extrahiert und in den Before-Images bereitgestellt.

Das führende System muß im Rahmen des LSC-Verfahrens in der Lage sein, eingehende Daten zu prüfen und erforderlichenfalls abzulehnen. Diese Funktion ist bei Back-officesystemen üblicherweise implementiert. Weitere auch in diesem Zusammenhang wichtige Funktionen wurden schon beschrieben. Hierzu gehört die Datenergänzung im Falle der Annahme, die im Zusammenhang mit dem Data-Merge-Verfahren beschrieben wurde, und die Übertragung des Primärschlüssels des führenden Systems, die ebenfalls bereits beschrieben wurde.

### 5. Ausbau und Variationen des dargestellten Verbundsystems

In dem dargestellten Beispiel wurde im wesentlichen der Datenaustausch zwischen dem Middleware-Server MS, der den Zentralrechnung eines CRM-PrOnt-Office-Systems bildet, und dem OLTP-R/3-System als Beispiel eines ERP-Back-office-Systems beschrieben.

Die beschriebenen Verfahrensweisen und Algorithmen sind jedoch auch auf andere Fälle anwendbar. Insbesondere kann das Middleware-System MS unter Verwendung der beschriebenen Verfahren mit unterschiedlichen weiteren Datenbanksystemen kommunizieren, deren logischer Aufbau auf der Ebene der bearbeiteten Objekte wenigstens teilweise Überlappungen zeigt, während ihre Struktur auf der Ebene der programmtechnischen Realisierung inkompatibel ist. Das MS-System kann somit unter Verwendung der beschriebenen Verfahrensweisen als Vermittlungssystem zwischen unterschiedlichen Fremd-Datenbanksystemen verwendet werden.

## Patentansprüche

1. Verfahren zum Austausch von Daten zwischen zwei Datenbanksystemen A und B, wobei jedes der Datenbanksysteme zur eindeutigen Identifizierung gespeicherter Datenobjekte für jedes Datenobjekt mittels einer Primärschlüssel-Erzeugungslogik einen systemspezifischen Primärschlüssel (K_{A} bzw. K_{B}) generiert,
bei welchem zur Ermöglichung der eindeutigen Identifizierbarkeit von aus einem Ursprungsdatenbanksystem A (OLTP-R/3) in ein Zieldatenbanksystem B (MS) transportierten Datenobjekten folgende Schritte durchgeführt werden:
a) Der Primärschlüssel (K_{A}) von Datenobjekten, die von dem Ursprungsdatenbanksystem A in das Zieldatenbanksystem B transportiert werden soll, wird mit einer Schlüssel-Mapping-Tabelle (KMT) verglichen, die die Primärschlüssel (K_{A}) und (K_{B}) aller Datenobjekte, für die bereits beide Primärschlüssel (K_{A} und K_{B}) generiert wurden, enthält;
b) wenn der Primärschlüssel (K_{A}) in der Schlüssel-Mapping-Tabelle (KMT) noch nicht vorhanden ist, wird mittels eines Primärschlüsselgenerators (KG) automatisch ein Primärschlüssel (K_{B}) des Zieldatenbanksystems B erzeugt, in dem Datenobjekt gespeichert und zusammen mit dem Primär-schlüssel (K_{A}) des Ursprungsdatenbanksystems A in der Schlüssel-Mapping-Tabelle KMT abgelegt;
c) wenn der Primärschlüssel (K_{A}) des Ursprungsdatenbanksystems A in der Schlüssel-Mapping-Tabelle (KMT) gefunden wurde, wird der entsprechende Primärschlüssel (K_{B}) des Zieldatenbanksystems B in dem Datenobjekt gespeichert.

2. Verfahren nach Anspruch 1, bei welchem der Primärschlüsselgenerator (KG) in dem Zieldatenbanksystem B integriert ist.

3. Verfahren nach einem der Ansprüche 1 oder 2, bei welchem der Primärschlüssel (K_{B}, K_{MS}) des Zieldatenbanksystems B (MS) nicht Bestandteil der in der Datenbank (OLTP-DB) des Ursprungsdatenbanksystems A (OLTP-R/3) abgespeicherten Daten ist.

4. Verfahren nach Anspruch 3, bei welchem der Primärschlüssel (K_{B}, K_{MS}) des Zieldatenbanksystems B (MS) bei einem Rückübertritt des Datenobjekts in das Ursprungsdatenbanksystem A (OLTP-R/3) aus dem Datenobjekt abgetrennt und geparkt wird.

5. Verfahren zum Updaten des Datenbestandes in einem zweiten Datenbanksystem B (MS) aufgrund von Änderungen, die in einem ersten Datenbanksystem A (OLTP-R/3) im dortigen Datenbestand durchgeführt wurden, wobei
der Datenbestand des ersten Datenbanksystem A (OLTP-R/3) sowohl für das zweite Datenbanksystems B (MS) nicht relevante Daten (D_{R/3}) als auch für das zweite Datenbanksystem B relevante Daten (D_{MIX}) enthält,
die Daten in den Datenbanksystemen in Form von Datenobjekten bearbeitet werden, die jeweils einen systemspezifischen Primärschlüssel (K_{MS},K_{R/3}) enthalten, und
die Daten in dem zweiten Datenbanksystems B (MS) mit beiden systemspezifischen Primärschlüsseln (K_{R/3} und K_{MS}) gespeichert werden,
bei welchem mindestens ein Teil folgender Verfahrensschritte durchgeführt wird:
a) Abtrennen der für das zweite Datenbanksystems B (MS) nicht relevanten Daten D_{R/3} aus dem Datenobjekt;
b) Übertritt des Datenobjektes von dem ersten Datenbanksystem A (OLTP-R/3) in das zweite Datenbanksystem B (MS) ;
c) Erzeugen eines für das Datenbanksystem B (MS) spezifischen Schlüssel (K_{MS}) und Hinzufügen des erzeugten Schlüssels (K_{MS}) zu dem Datenobjekt und
d) Einbringen des entstandenen Datenobjektes (BDoc) in die Abspeicherungsroutine des zweiten Datenbanksystems B (MS) und Abspeichern der in dem Datenobjekt enthaltenen Daten in der Datenbank (CD) des zweite Datenbanksystem B (MS).

6. Verfahren nach Anspruch 5, bei welchem der Daten-Rekord des Datenobjektes vor dem Einbringen in die Abspeicherungsroutine mit Ergänzungswerten (D_{MS}) ergänzt wird, die dem Datenbestand des zweiten Datenbanksystems B (MS) entsprechen.

7. Verfahren zum Updaten des Datenbestandes in einem ersten Datenbanksystem A (OLTP-R/3) aufgrund von Änderungen, die in einem zweiten Datenbanksystem B (MS) im dortigen Datenbestand durchgeführt wurden, wobei der Datenbestand des zweiten Datenbanksystems B (MS) sowohl für das erste Datenbanksystem A (OLTP-R/3) nicht relevante Daten (D_{MS}) als auch für das erste Datenbanksystem A relevante Daten (D_{MIX}) enthält, die Daten in den Datenbanksystemen in Form von Datenobjekten bearbeitet werden, die jeweils einen systemspezifischen Primärschlüssel (K_{MS},K_{R/3}) enthalten, und
die Daten in dem ersten Datenbanksystem A (OLTP-R/3) nur mit dessen systemspezifischem Primärschlüssel (K_{R/3}) gespeichert werden,
bei welchem mindestens ein Teil folgender Verfahrensschritte durchgeführt wird:
a) Abtrennen der für das erste Datenbanksystem A (OLTP-R/3) nicht relevanten Daten D_{MS} aus dem Datenobjekt und Parken dieser Daten in dem zweiten Datenbanksystem B (MS);
b) Übertritt des Datenobjektes von dem zweiten Datenbanksystem B (MS) in das erste Datenbanksystem A (OLTP-R/3);
c) Abtrennen des für das zweite Datenbanksystem B (MS) systemspezifischen Schlüssels (K_{MS}) aus dem Datenobjekt und Parken dieses Schlüssels (K_{MS}) in dem ersten Datenbanksystem A (OLTP-R/3);
d) Einbringen des entstandenen Datenobjektes in die Abspeicherungsroutine des ersten Datenbanksystems A (OLTP-R/3) und Abspeichern der in dem Datenobjekt enthaltenen Daten in der Datenbank (OLTP-DB) des ersten Datenbankssystems A (OLTP-R/3).

8. Verfahren nach Anspruch 7, bei welchem der Daten-Rekord des Datenobjektes vor dem Einbringen in die Abspeicherungsroutine mit Ergänzungswerten (D_{D}) ergänzt werden, die dem Datenbestand des ersten Datenbanksystems A (OLTP-R/3) entsprechen.

9. Verfahren nach einem der Ansprüche 7 oder 8, bei welchem wenigstens ein Teil folgender weiterer Verfahrensschritte stattfindet:
e) Auslösen eines Events als Folge des Abspeicherns in der Datenbank (OLTP-DB) des ersten Datenbanksystems A (OLTP-R/3);
f) Empfangen des Events durch eine auf das Event abonnierte Komponente (RSA) des zweiten Datenbanksystems B (MS);
g) Hinzufügen des geparkten für das Datenbanksystem B (MS) spezifischen Schlüssels (K_{MS});
h) Entfernen von für das erste Datenbanksystem A (OLTP-R/3) spezifischen Daten (D_{R/3});
i) Übertritt in das zweite Datenbanksystem B in Form eines Datenobjektes, das die für beide Datenbanksysteme relevanten Daten D_{MIX}, den für das Datenbanksystem B (MS) spezifischen Schlüssel (K_{MS}) und den für das Datenbanksystem A (OLTP-R/3) spezifischen Schlüssel (K_{R/3}) enthält;
j) Hinzufügen der in dem zweiten Datenbanksystem B (MS) geparkten für das erste Datenbanksystem nicht relevanten Daten (D_{MS}).

10. Verfahren nach einem der Ansprüche 1 bis 9, bei welchem zur Vermeidung von Datenkonflikten bei der gesharten Neuerfassung von Daten in einem beliebigen Datenbanksystem eines Verbundes mehrerer Datenbanksysteme (OLTP-R/3, MS),
für jedes zwischen den Datenbanksystemen austauschbare Datenobjekt eines der Datenbanksysteme (OLTP-R/3) als führendes System FS definiert wird und
bei jeder Neuerfassung oder Änderung in einem geführten Systems GS (MS) von Daten des Datenobjekts, die auch zum Datenbestand des führenden Systems FS (OLTP-R/3) gehören, ein systemübergreifender Bestätigungsalgorithmus durchgeführt wird, bei dem
a) ein Datenobjekt, das die Änderung beinhaltet, zu dem führenden System FS (OLTP-R/3) transportiert wird,
b) in dem führenden System FS eine Rückmeldung in Form einer Bestätigung oder mindestens teilweisen Ablehnung der Änderung erzeugt wird und
c) ein Datenobjekt, das die Rückmeldung enthält, zu dem geführten System GS (MS) zurücktransportiert wird.

11. Verfahren nach Anspruch 10, bei welchem eine Datenbank LD des geführten Systems GS (MS) den Bestätigungszustand eines geänderten Datenobjektes mittels eines Zählerfeldes protokolliert, dessen Zählerstand mit jeder Änderung in einem dem Zählerfeld zugeordneten Datensatz erhöht und mit jeder Rückmeldung vermindert wird, so daß das Zählerfeld in dem geführten System GS (MS) die Anzeige des Bestätigungszustandes und der Anzahl der Änderungen, für die noch keine Rückmeldung vorliegt, ermöglicht.

12. Verfahren nach einem der Ansprüche 10 oder 11, bei welchem im Falle einer mindestens teilweisen Ablehnung der Änderung ein Before Image des Zustandes vor der Datenänderung verwendet wird, um in dem geführten System GS (MS) diesen Zustand wiederherzustellen.

13. Verfahren nach Anspruch 12, bei welchem im Falle einer Fehlermeldung auch der fehlerhaft geänderte Zustand in dem geführten System GS (MS) zur Korrektur und weiteren Bearbeitung zur Verfügung gestellt wird.

14. Computerprogrammprodukt, das direkt in den Speicher eines digitalen Computers geladen werden kann und Softwareabschnitte umfaßt, mit denen die Schritte des Verfahrens nach einem der Ansprüche 1 bis 13 ausgeführt werden, wenn das Produkt auf einem Computer läuft.

15. Computergeeignetes Speichermedium mit einem Computerprogrammprodukt nach Anspruch 14.

16. Datenbank-Netzwerksystem, enthaltend ein Computerprogrammprodukt nach Anspruch 15.

## Claims

1. Method for exchanging data between two data base systems A and B, where, for the unique identification of stored data objects, each of the data base systems generates by means of a primary-key creation logic a system-specific primary key (K_{A} or K_{B}) for each data object,
in which, to permit data objects transported from a source data base system A (OLTP-R/3) to a destination data base system B (MS) to be uniquely identifiable the following steps are carried out:
a) the primary key (K_{A}) of data objects which are to be transported from the source data base system A to the destination data base system B is compared with a key mapping table (KMT) which contains the primary keys (K_{A}) and (K_{B}) for all data objects for which both primary keys (K_{A} and K_{B}) have already been generated;
b) if the primary key (K_{A}) is not yet available in the key mapping table (KMT), a primary key (K_{B}) of the destination data base system (B) is automatically created using a primary key generator (KG), is stored in the data object and is stored in the key mapping table KMT together with the primary key (K_{A}) of the source data base system A;
c) if the primary key (K_{A}) of the source data base system A was found in the key mapping table (KMT), the corresponding primary key (K_{B}) of the destination data base system B is stored in the data object.

2. Method according to claim 1, in which the primary key generator (KG) is integrated in the destination data base system B.

3. Method according to any one of claims 1 or 2, in which the primary key (K_{B,} K_{MS}) of the destination data base system B (MS) is not a part of the data stored in the data base (OLTP-DB) of the source data base system A (OLTP-R/3).

4. Method according to claim 3, in which, if the data object is transferred back to the source data base system A (OLTP-R/3), the primary key (K_{B}, K_{MS}) of the destination data base system B (MS) is removed from the data object and is parked.

5. Method for updating the dataset in a second data base system B (MS) as a result of changes which have been made in the dataset in a first data base system A (OLTP-R/3), where
the dataset of the first data base system A (OLTP-R/3) contains both data (D_{R/3}) which are not relevant to the second data base system B (MS) and data (D_{MIX}) which are relevant to the second data base system B,
the data in the data base systems are processed in the form of data objects which each contain a system-specific primary key (K_{MS}, K_{R/3}) and
the data in the second data base system B (MS) are stored with the two system-specific primary keys (K_{R/3} and K_{MS}),
in which at least a part of the following procedural steps are carried out:
a) removing from the data object data D_{R/3} which are not relevant to the second data base system B (MS);
b) transfer of the data object from the first data base system A (OLTP-R/3) to the second data base system B (MS);
c) creating a key (K_{MS}) which is specific to the data base system B (MS), and adding the created key (K_{MS}) to the data object, and
d) putting the produced data object (BDoc) into the storage routine of the second data base system B (MS), and storing the data contained in the data object in the data base (CD) of the second data base system B (MS).

6. Method according to Claim 5, in which, before being put into the storage routine, the data record of the data object is complemented with additional values (D_{MS}) which correspond to the dataset of the second data base system B (MS).

7. Method for updating the dataset in a first data base system A (OLTP-R/3) as a result of changes which have been made in the dataset in a second data base system B (MS), where
the dataset of the second data base system B (MS) contains both data (D_{MS}) which are not relevant to the first data base system A (OLTP-R/3) and data (D_{MIX}) which are relevant to the first data base system A,
the data in the data base systems are processed in the form of data objects which each contain a system-specific primary key (K_{MS}, K_{R/3}), and
the data are stored in the first data base system A (OLTP-R/3) only with the system-specific primary key (K_{R/3}) thereof,
in which at least a part of the following procedural steps are carried out:
a) removing from the data object the data D_{MS} which are not relevant to the first data base system A (OLTP-R/3) and parking these data in the second data base system B (MS);
b) transfer of the data object from the second data base system B (MS) to the first data base system A (OLTP-R/3);
c) removing the system-specific key (K_{MS}) for the second data base system B (MS) from the data object, and parking this key (K_{MS}) in the first data base system A (OLTP-R/3);
d) putting the produced data object into the storage routine of the first data base system A (OLTP-R/3), and storing the data contained in the data object in the data base (OLTP-DB) of the first data base system A (OLTP-R/3).

8. Method according to claim 7, in which, before being put into the storage routine, the data record of the data object is complemented with additional values (D_{D}) which correspond to the dataset of the first data base system A (OLTP-R/3).

9. Method according to any one of claims 7 or 8, in which at least a part of the following further procedural steps are carried out:
e) triggering of an event as a result of the storage in the data base (OLTP-DB) of the first data base system A (OLTP-R/3);
f) receiving of the event by a component (RSA) of the second data base system B (MS) which has subscribed to the event;
g) adding the parked key (K_{MS}) specific to the data base system B (MS);
h) removing data (D_{R/3}) which are specific to the first data base system A (OLTP-R/3);
i) transfer to the second data base system B in the form of a data object which contains the data D_{MIX} which are relevant to both data base systems, the key (K_{MS}) specific to the data base system B (MS), and the key (K_{R/3}) specific to the data base system A (OLTP-R/3);
j) adding the data (D_{MS}) parked in the second data base system B (MS) which are not relevant to the first data base system.

10. Method according to any one of claims' 1 to 9 in which, to prevent data conflicts in the context of the shared new entry of data in any one of the data base systems of a composite system of a plurality of data base systems (OLTP-R/3, MS),
one of the data base systems (OLTP-R/3) is defined as leading system FS for each data object which can be exchanged between the data base systems, and,
for each new entry or change in a led system GS (MS) of data in the data object which are also part of the dataset of the leading system FS (OLTP-R/3), an intersystem confirmation algorithm is executed, in which
a) a data object containing the change is transported to the leading system FS (OLTP-R/3),
b) the leading system FS creates a feedback in the form of a confirmation or at least partial rejection of the change, and
c) a data object containing the feedback is transported back to the led system GS (MS).

11. Method according to claim 10, in which a data base LD of the led system GS (MS) logs the confirmation state of a changed data object using a counter section whose counter reading is increased with each change in a data record allocated to the counter section and is reduced with each feedback, so that the counter section in the led system GS (MS) makes it possible to display the confirmation state and the number of changes for which there is still no feedback.

12. Method according to any one of claims 10 or 11, in which, in the event of the change being at least partially rejected, a before image of the state before the data change is used in order to restore this state in the led system GS (MS).

13. Method according to claim 12, in which, in the event of an error message, the incorrectly changed state is also made available in the led system GS (MS) to allow correction during further processing.

14. Computer program product which can be loaded directly into the memory of a digital computer and comprises software sections which are used to execute the steps of the method according to any one of claims 1 to 13 when the product is running on a computer.

15. Computer-compatible storage medium containing a computer program product according to claim 14.

16. Data base network system, containing a computer program product according to claim 15.

## Revendications

1. Procédé pour échanger des données entre deux systèmes de banque de données A et B, dans lesquels chacun des systèmes de banque de données pour identifier clairement les objets de données mémorisés pour chaque objet de données, génère une clé primaire spécifique au système (K_{A} ou K_{B}) au moyen d'une logique de génération de clés primaires,
dans lequel sont réalisées les étapes suivantes pour permettre la capacité d'identification claire d'objets de données transportés d'un système de banque de données d'origine A (OLTP-R/3) dans un système de banque de données cible B (MS) :
a) La clé primaire (K_{A}) d'objets de données qui doivent être transportés du système de banque de données d'origine A dans le système de banque de données cible B est comparée à un tableau de représentation de clés (KMT) qui contient les clés primaires (K_{A}) et (K_{B}) de tous les objets de données pour lesquels deux clés primaires (K_{A} et K_{B}) ont déjà été générées ;
b) lorsque la clé primaire (KA) n'est pas encore présente dans le tableau de représentation de clés (KMT), une clé primaire (KB) du système de banque de données cible est générée automatiquement au moyen d'un générateur de clés primaires (KG), dans lequel l'objet de données est mémorisé et classé conjointement avec la clé primaire (KA) du système de banque de données d'origine A dans le tableau de représentation de clé KMT ;
c) lorsque la clé primaire (KA) du système de banque de données d'origine A a été trouvée dans le tableau de représentation de clés (KMT), la clé primaire correspondante (KB) du système de banque de données cible B est mémorisée dans l'objet de données.

2. Procédé selon la revendication 1, dans lequel le générateur de clés primaires (KG) est intégré dans le système de banque de données cible B.

3. Procédé selon l'une des revendications 1 ou 2, dans lequel la clé primaire (KB, KMS) du système de banque de données cible B (MS) ne fait pas partie intégrante des données mémorisées dans la banque de données (OLTP-DB) du système de banque de données d'origine A (OLTP-R/3).

4. Procédé selon la revendication 3, dans lequel la clé primaire (KB, KMS) du système de banque de données cible B (MS) est séparée de l'objet de données et rangée lors d'un passage en retour de l'objet de données dans le système de banque de données d'origine A (OLTP-R/3).

5. Procédé pour la mise à jour de l'état des données dans un deuxième système de banque de données B (MS) sur la base de modifications qui ont été réalisées dans un premier système de banque de données A (OLTP-R/3) dans l'état des données de celle-ci,
l'état des données du premier système de banque de données A (OLTP-R/3) contenant aussi bien des données non significatives (DR/3) pour le deuxième système de banque de données B (MS) que des données significatives (DMIX) pour le deuxième système de banque de données B,
les données dans les systèmes de banque de données étant traitées sous la forme d'objets de données qui contiennent chacun une clé primaire spécifique au système (KMS, KR/3), et
les données dans le deuxième système de banque de données B (MS) étant mémorisées avec les deux clés primaires spécifiques au système (KR/3 et KMS),
dans lequel au moins une partie des étapes de procédé suivantes est réalisée :
a) séparation de l'objet de données des données non significatives DR/3 pour le deuxième système de banque de données B (MS) ;
b) passage de l'objet de données du premier système de banque de données A (OLTP-R/3) dans le second système de banque de données B (MS) ;
c) génération d'une clé (KMS) spécifique au système de banque de données B (MS) et ajout de la clé générée (KMS) à l'objet de données et
d) insertion de l'objet de données créé (BDoc) dans la routine de mémorisation du deuxième système de banque de données B (MS) et mémorisation des données contenues dans l'objet de données dans la banque de données (CD) du deuxième système de banque de données B (MS).

6. Procédé selon la revendication 5, dans lequel l'enregistrement de données de l'objet de données est complété avant l'insertion dans la routine de mémorisation par des valeurs complémentaires (DMS), qui correspondent à l'état des données du deuxième système de banque de données B (MS).

7. Procédé pour mettre à jour l'état des données dans un premier système de banque de données A (OLTP-R/3), sur la base de modifications qui ont été réalisées dans un deuxième système de banque de données B (MS) dans l'état des données ici,
l'état des données du deuxième système de banque de données B (MS) contenant aussi bien des données non significatives (D_{MS}) pour ie premier système de banque de données A (OLTP-R/3) que des données significatives (D_{MIX}) pour le premier système de banque de données A,
les données étant traitées dans les systèmes de banque de données sous la forme d'objets de données qui contiennent chacun une clé primaire spécifique au système (KMS KR/3), et
les données étant mémorisées dans le premier système de banque de données A (OLTP-R/3) uniquement avec la clé primaire spécifique au système (KR/3),
dans lequel au moins une partie des étapes de procédé suivantes est réalisée :
a) séparation de l'objet de données des données non significatives DMS pour le premier système de banque de données A (OLTP-R/3) et rangement de ces données dans le deuxième système de banque de données B (MS) ;
b) passage de l'objet de données du deuxième système de banque de données B (MS) dans le premier système de banque de données A (OLTP-R/3) ;
c) séparation de l'objet de données de la clé (KMS) spécifique au deuxième système de banque de données B (MS) et rangement de cette clé (KMS) dans le premier système de banque de données A (OLTP-R/3) ;
d) insertion de l'objet de données créé dans la routine de mémorisation du premier système de banque de données A (OLTP-R/3) et mémorisation des données contenues dans l'objet de données dans la banque de données (OLTP-DB) du premier système de banque de données A (OLTP-R/3).

8. Procédé selon la revendication 7, dans lequel l'enregistrement de données de l'objet de données est complété avant l'insertion dans la routine de mémorisation par des valeurs complémentaires (DD), qui correspondent à l'état des données du premier système de banque de données A (OLTP-R/3).

9. Procédé selon l'une des revendications 7 ou 8, dans lequel au moins une partie des autres étapes de procédé suivantes a lieu :
e) déclenchement d'un événement en tant que suite de la mémorisation dans la banque de données (OLTP-DB) du premier système de banque de données A (OLTP-R/3) ;
f) réception de l'événement par l'une des composantes (RSA) du deuxième système de banque de données B (MS) abonnées sur l'événement ;
g) ajout de la clé rangée (KMS) spécifique pour le système de banque de données B (MS) ;
h) élimination de données spécifiques (DR/3) pour le premier système de banque de données A (OLTP-R/3) ;
i) passage dans le deuxième système de banque de données B sous la forme d'un objet de données qui contient les données DMIX significatives pour les deux système de banque de données, la clé (KMS) spécifique pour le système de banque de données B (MS) et la clé (KR/3) spécifique pour le système de banque de données A (OLTP-R/3) ;
j) ajout des données (DMS) non significatives pour le premier système de banque de données rangées dans le second système de banque de données B (MS).

10. Procédé selon l'une des revendications 1 à 9, dans lequel pour éviter des conflits de données lors de la nouvelle saisie partagée de données dans un système de banque de données quelconque d'une interconnexion de plusieurs système de banque de données (OLTP-R/3,MS),
pour chaque objet de données échangeable entre les systèmes de banque de données l'un des systèmes de banque de données (OLTP-R/3) est défini comme système directeur FS et
lors de chaque nouvelle saisie ou modification dans un système commandé GS (MS) de données de l'objet de données, qui appartiennent également à l'état des données du système directeur FS (OLTP-R/3), un algorithme de confirmation affectant les systèmes est réalisé, dans lequel
a) un objet de données qui contient la modification est transporté vers le système directeur FS(OLTP-R/3),
b) dans le système directeur FS est générée un accusé de réception sous la forme d'une confirmation ou d'un refus au moins partiel de la modification et
c) un objet de données qui contient l'accusé de réception, est transporté en retour vers le système commandé GS (MS).

11. Procédé selon la revendication 10, dans lequel une banque de données LD du système commandé GS (MS) rend compte de l'état de confirmation d'un objet de données modifié au moyen d'un champ de compteur, dont l'état de compteur augmente avec chaque modification dans un enregistrement associé au champ de compteur, et est réduit avec chaque accusé de réception, de telle sorte que le champ de compteur dans le système commandé GS (MS) permet l'affichage de l'état de confirmation et du nombre de modifications, pour lesquelles un accusé de réception n'existe pas encore.

12. Procédé selon l'une des revendication 10 ou 11, dans lequel dans cas d'un refus au moins partiel de la modification est utilisée une image antérieure de l'état avant la modification de données, afin de restaurer cet état dans le système commandé GS (MS).

13. Procédé selon la revendication 12, dans lequel dans le cas d'un message d'erreur est aussi mis à disposition l'état modifié de manière incorrecte dans le système commandé GS (MS) pour correction et nouveau traitement.

14. Produit de programme informatique, qui peut être chargé directement dans la mémoire d'un ordinateur numérique et englobe des segments logiciels avec lesquels sont exécutées les étapes du procédé selon l'une des revendications 1 à 13, lorsque le produit fonctionne sur un ordinateur.

15. Support de mémorisation convenant pour un ordinateur, comportant un produit de programme informatique selon la revendication 14.

16. Système de réseau de banque de données contenant un produit de programme informatique selon la revendication 15.
